(19) Europäisches Patentamt
European Patent Office
Office européen des brevets

(11) **EP 4 306 579 A1**

(12) **EUROPEAN PATENT APPLICATION**
published in accordance with Art. 153(4) EPC

(43) Date of publication:
**17.01.2024 Bulletin 2024/03**

(21) Application number: **22767135.1**

(22) Date of filing: **08.03.2022**

(51) International Patent Classification (IPC):
***C08J 9/16*** *(2006.01)*

(52) Cooperative Patent Classification (CPC):
**C08J 9/16**

(86) International application number:
**PCT/JP2022/009986**

(87) International publication number:
**WO 2022/191181 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2021 JP 2021038634**

(71) Applicant: **Kaneka Corporation
Osaka-shi, Osaka 530-8288 (JP)**

(72) Inventor: **NAKAYAMA, Kiyotaka
Settsu-shi, Osaka 566-0072 (JP)**

(74) Representative: **Vossius & Partner
Patentanwälte Rechtsanwälte mbB
Siebertstrasse 3
81675 München (DE)**

(54) **POLYPROPYLENE RESIN COMPOSITION FOR EXTRUSION BLOWING, EXTRUSION-BLOWN PARTICLES, AND MOLDED FOAM**

(57)    An object is to provide a polypropylene-based resin composition for extrusion foaming that provides polypropylene-based resin extruded expanded particles excellent in moldability and a polypropylene-based resin foamed molded product excellent in static compressive strength and tensile elongation at break. The polypropylene-based resin composition for extrusion foaming includes a branched polypropylene-based resin (A) and a branched polypropylene-based resin (B) in respective specific amounts, the branched polypropylene-based resin (A) having a tensile modulus that falls within a specific range, the branched polypropylene-based resin (B) having a tensile modulus and a nominal tensile strain at break that fall within respective specific ranges.

EP 4 306 579 A1

**Description**

Technical Field

The present invention relates to a polypropylene-based resin composition for extrusion foaming, extruded expanded particles, and a foamed molded product.

Background Art

A polypropylene-based resin foamed molded product obtained with use of polypropylene-based resin expanded particles has characteristics such as the property of being formed in any shape, shock-absorbing properties, lightweight properties, and heat insulating properties, which are the advantages of a foamed molded product.

Examples of a method for producing polypropylene-based resin expanded particles encompass a batch expansion method, which is a discontinuous process, and an extrusion foaming method, which is a continuous process. The extrusion foaming method offers many advantages from the perspectives of efficiency and the environment.

Examples of the technique for obtaining polypropylene-based resin expanded particles by an extrusion foaming method encompass the technique disclosed in Patent Literature 1. Patent Literature 1 discloses polypropylene-based resin pre-expanded particles that are obtained by a specific method and that is characterized by having a melting point peak the half-width of which is not less than 20°C in crystal melting measurement carried out by differential scanning calorimetry.

Citation List

[Patent Literature]

[Patent Literature 1]
Japanese Patent Application Publication, Tokukai, No. 2009-256460

Summary of Invention

Technical Problem

However, the conventional technique as described above is not sufficient from the viewpoints of the moldability of polypropylene-based resin extruded expanded particles and the static compressive strength and tensile elongation at break of a polypropylene-based resin foamed molded product, and is thus susceptible of further improvement.

An embodiment of the present invention has been made in view of the above problem, and an object thereof is to provide a polypropylene-based resin composition for extrusion foaming that provides polypropylene-based resin extruded expanded particles excellent in moldability and a polypropylene-based resin foamed molded product excellent in static compressive strength and tensile elongation at break.

Solution to Problem

Specifically, a polypropylene-based resin composition for extrusion foaming in accordance with an embodiment of the present invention includes: relative to 100 weight% of all resin components of the polypropylene-based resin composition for extrusion foaming, a polypropylene-based resin (A) with a branched structure in an amount of not less than 65 weight% and not more than 85 weight% and a polypropylene-based resin (B) with a branched structure in an amount of not less than 15 weight% and not more than 35 weight%, the polypropylene-based resin (A) with a branched structure having a tensile modulus defined in JIS K 7161 of not less than 1100 MPa, the polypropylene-based resin (B) with a branched structure having a tensile modulus defined in JIS K 7161 of not less than 550 MPa and not more than 950 MPa and a nominal tensile strain at break defined in JIS K 7161 of not less than 50%.

Further, a foamed molded product in accordance with an embodiment of the present invention is a polypropylene-based resin foamed molded product that is prepared by molding extruded expanded particles obtained by extrusion expansion of a resin composition which includes a polypropylene-based resin with a branched structure, the extruded expanded particles having an open cell ratio of not more than 15%, the polypropylene-based resin foamed molded product having a density of 60 g/L to 300 g/L, the polypropylene-based resin foamed molded product having a tensile elongation at break which satisfies Expression 1 and a static compressive strength which satisfies Expression 2:

$$\text{Tensile elongation at break (\%)} \geq -0.000002 \times D^3 + 0.0011 \times D^2 - 0.285 \times D + 32.2 \cdots \text{(Expression 1)},$$

$$\text{Static compressive strength (kPa)} \geq 0.000049 \times D^3 + 0.0542 \times D^2 - 0.265 \times D + 146.9 \cdots \text{(Expression 2)},$$

where D of Expression 1 and Expression 2 represents the density (g/L) of the polypropylene-based resin foamed molded product.

Advantageous Effects of Invention

An embodiment of the present invention brings about an effect of being capable of providing a polypropylene-based resin composition for extrusion foaming that provides polypropylene-based resin extruded expanded particles excellent in moldability and a polypropylene-based resin foamed molded product excellent in the static compressive strength and tensile elongation at break.

Description of Embodiments

The following description will discuss an embodiment of the present invention. However, the present invention is not limited to the embodiment below. The present invention is not limited to the configurations described below, but may be altered in various ways within the scope of the claims by a person skilled in the art. The present invention also encompasses, in its technical scope, any embodiment or example derived by combining technical means disclosed in differing embodiments or examples. Further, a new technical feature can be formed by combining the technical means disclosed in differing embodiments. All of the academic documents and patent literatures listed herein are incorporated herein by reference. The expression "A to B", representing a numerical range, herein means "not less than A (inclusive of A and greater than A) and not more than B (inclusive of B and smaller than B)" unless otherwise specified herein.

[1. Technical idea of embodiment of present invention]

The inventors of the present invention found that a foamed molded product obtained with use of polypropylene-based resin expanded particles obtained by an extrusion foaming method is inferior to a foamed molded product obtained with use of polypropylene-based resin expanded particles obtained by a pressure-release expansion method, in static compressive strength and tensile elongation at break. To solve this problem, the inventors of the present invention conducted a study, which revealed that by using a branched polypropylene-based resin that has a tensile modulus which falls within a specific range, it was possible to more or less improve the static compressive strength, but the tensile elongation at break tended to be inferior. The study also revealed that by blending, into a branched polypropylene-based resin, one or more of various types of resins such as a commodity linear polypropylene-based resin and an elastomer, it was possible to improve the tensile elongation at break to some degree, but the static compressive strength tended to decrease in exchange. It was also observed that in a case of blending a commodity linear polypropylene-based resin into a branched polypropylene-based resin, the moldability tended to be inferior.

As a result of a further study, the inventors of the present invention found that by using a polypropylene-based resin composition for extrusion foaming that includes a branched polypropylene-based resin (A) and a branched polypropylene-based resin (B) in respective specific amounts, the branched polypropylene-based resin (A) having a tensile modulus that falls within a specific range, the branched polypropylene-based resin (B) having a tensile modulus and a nominal tensile strain at break that fall within respective specific ranges, it is possible to obtain polypropylene-based resin extruded expanded particles excellent in moldability and a polypropylene-based resin foamed molded product excellent in static compressive strength and a tensile elongation at break.

[2. Polypropylene-based resin composition for extrusion foaming]

A polypropylene-based resin composition for extrusion foaming in accordance with an embodiment of the present invention includes: relative to 100 weight% of all resin components of the polypropylene-based resin composition for extrusion foaming, a polypropylene-based resin (A) with a branched structure in an amount of not less than 65 weight% and not more than 85 weight% and a polypropylene-based resin (B) with a branched structure in an amount of not less than 15 weight% and not more than 35 weight%, the polypropylene-based resin (A) with a branched structure having a tensile modulus defined in JIS K 7161 of not less than 1100 MPa, the polypropylene-based resin (B) with a branched structure having a tensile modulus defined in JIS K 7161 of not less than 550 MPa and not more than 950 MPa and a nominal tensile strain at break defined in JIS K 7161 of not less than 50%.

Polypropylene-based resin extruded expanded particles can be obtained by extrusion expansion of the polypropylene-based resin composition for extrusion foaming. Further, a polypropylene-based resin foamed molded product can be prepared by molding (e.g., in-mold foam molding) of the polypropylene-based resin extruded expanded particles. In the present specification, the "polypropylene-based resin composition for extrusion foaming" can be referred to as a "resin composition", and the "polypropylene-based resin composition for extrusion foaming in accordance with an embodiment of the present invention" can be referred to as the "present resin composition". Further, in the present specification, the "polypropylene-based resin extruded expanded particles" can be referred to as "extruded expanded particles", the "polypropylene-based resin extruded expanded particles in accordance with an embodiment of the present invention" can be referred to as the "present extruded expanded particles", the "polypropylene-based resin foamed molded product" can be referred to as a "foamed molded product", and the "polypropylene-based resin foamed molded product in accordance with an embodiment of the present invention" can be referred to as the "present foamed molded product".

The present resin composition, which has the above configuration, has the advantage of being capable of providing extruded expanded particles excellent in moldability and a foamed molded product excellent in static compressive strength and tensile elongation at break. Note that in the present specification, the moldability of the present extruded expanded particles is evaluated on the basis of a molding range of the extruded expanded particles. The molding range will be described later. The static compressive strength and the tensile elongation at break will also be described later.

Examples of the use of the present resin composition can encompass extruded expanded particles, an extruded foamed sheet, and an extruded foamed board. By extrusion expansion of the present resin composition, extruded expanded particles, extruded foamed sheet, or extruded foamed board can be obtained. Note that the extruded expanded particles, the extruded foamed sheet, and the extruded foamed board are individually produced by changing, as appropriate, the shape of a die and a chopping method.

<2-1. Polypropylene-based resin with a branched structure >

In the present specification, "polypropylene-based resin with a branched structure" is intended to mean: (a) the polypropylene-based resin in which polypropylene-based resin molecules each having no branched structure introduced therein are intermolecularly crosslinked at respective parts of the molecules; and (b) a polypropylene-based resin that is derived from a polypropylene-based resin which has no branched structure introduced therein and that is obtained by introducing, as a branched chain, a diene compound or the like which is other than (poly)propylene into the polypropylene-based resin which has no branched structure introduced therein. In the present specification, the "polypropylene-based resin which has no branched structure introduced therein" can be referred to as a "linear polypropylene-based resin". The "polypropylene-based resin with a branched structure" can be referred to as a "branched polypropylene-based resin". The "linear polypropylene-based resin" and the "branched polypropylene-based resin" can collectively be referred to as a "polypropylene-based resin". It can be said that the linear polypropylene-based resin is a raw material of the branched polypropylene-based resin.

In the present specification, polypropylene-based resin is intended to mean the resin that contains a structural unit derived from a propylene monomer, in a proportion of not less than 50 mol% per 100 mol% of all structural units contained in the resin. In the present specification, the "structural unit derived from a propylene monomer" can also be referred to as a "propylene unit".

The present resin composition includes the polypropylene-based resin (A) with a branched structure, and the polypropylene-based resin (B) with a branched structure. In the present specification, the "polypropylene-based resin (A) with a branched structure" can be referred to as a "branched polypropylene-based resin (A)", and the "polypropylene-based resin (B) with a branched structure" can be referred to as a "branched polypropylene-based resin (B)".

The branched polypropylene-based resin (A) has a tensile modulus defined in JIS K 7161 of not less than 1100 MPa. JIS K 7161 corresponds to ISO527-1. With the present resin composition including the branched polypropylene-based resin (A), it is possible to provide a foamed molded product excellent in static compressive strength.

The tensile modulus of the branched polypropylene-based resin (A) is preferably not less than 1200 MPa, more preferably not less than 1300 MPa, even more preferably not less than 1400 MPa, and particularly preferably not less than 1500 MPa. The upper limit of the tensile modulus of the branched polypropylene-based resin (A) is not particularly limited. For example, the upper limit may be not more than 3000 MPa, or may be not more than 2500 MPa.

The nominal tensile strain at break of the branched polypropylene-based resin (A) is preferably less than 50% and more preferably not more than 45%. The lower limit of the nominal tensile strain at break of the branched polypropylene-based resin (B) is not particularly limited. For example, the lower limit may be not less than 5%, or may be not less than 10%.

The amount of the branched polypropylene-based resin (A) contained in the present resin composition is not less than 65 weight% and not more than 85 weight% and is preferably not less than 70 weight% and not more than 80 weight%, relative to 100 weight% of all resin components of the present resin composition. When the amount of the branched polypropylene-based resin (A) contained is not less than 65 weight%, it is possible to provide a foamed molded product excellent in static compressive strength. When the amount of the branched polypropylene-based resin (A) contained is not more than 85 weight%, it is possible to curb a decrease in the tensile elongation at break. Note that in the present specification, the "resin component" is intended to mean a concept that encompasses the branched polypropylene-based resin (A), the branched polypropylene-based resin (B), and another resin (described later) that are included in the present resin composition. This "resin component" can be a concept that excludes a stabilizer and an additive that will be described later.

The branched polypropylene-based resin (B) has a tensile modulus defined in JIS K 7161 of not less than 550 MPa and not more than 950 MPa, and a nominal tensile strain at break defined in JIS K 7161 of not less than 50%. With the present resin composition including the branched polypropylene-based resin (B), it is possible to reduce the open cell ratio of the extruded expanded particles. As a result, it is possible to provide extruded expanded particles excellent in moldability. In addition, with the present resin composition including the branched polypropylene-based resin (B), it is possible to provide a foamed molded product excellent in tensile elongation at break.

The tensile modulus of the branched polypropylene-based resin (B) is preferably not less than 600 MPa and not more than 900 MPa, more preferably not less than 600 MPa and not more than 850 MPa, and even more preferably not less than 650 MPa and not more than 850 MPa. Note that an elastomer, which is described above, has a tensile modulus of less than 550 MPa. The nominal tensile strain at break of the branched polypropylene-based resin (B) is preferably not less than 55%, more preferably not less than 60%, even more preferably not less than 80%, and particularly preferably not less than 100%. The upper limit of the nominal tensile strain at break of the branched polypropylene-based resin (B) is not particularly limited. For example, the upper limit may be not more than 500%, or may be not more than 400%.

The amount of the branched polypropylene-based resin (B) contained in the present resin composition is not less than 15 weight% and not more than 35 weight% and is preferably not less than 20 weight% and not more than 30 weight%, relative to 100 weight% of all resin components of the present resin composition. When the amount of the branched polypropylene-based resin (B) contained is not less than 15 weight%, it is possible to provide extruded expanded particles excellent in moldability and a foamed molded product excellent in tensile elongation at break. When the amount of the branched polypropylene-based resin (B) contained is not more than 35 weight%, it is possible to curb a decrease in static compressive strength.

The branched polypropylene-based resin (A) has a melting point that is preferably not less than 145°C, more preferably not less than 150°C, and even more preferably not less than 155°C. The upper limit of the melting point of the branched polypropylene-based resin (A) is not particularly limited. For example, the upper limit may be not more than 170°C, or may be not more than 165°C. The branched polypropylene-based resin (B) has a melting point that is preferably less than 145°C, more preferably not more than 143°C, and even more preferably not more than 140°C. The lower limit of the melting point of the branched polypropylene-based resin (B) is not particularly limited. For example, the lower limit may be not less than 120°C, or may be not less than 125°C. By using, in combination, the branched polypropylene-based resin (A) and the branched polypropylene-based resin (B) that have these melting points, it is possible to provide a foamed molded product having an excellent balance between the static compressive strength and the tensile elongation at break.

In the present specification, the melting point of a branched polypropylene-based resin is a value determined by measurement in differential scanning calorimetry (hereinafter referred to as "DSC method"). The details of the operational procedure (measurement method) are as follows: (a1) the temperature of 5 mg to 6 mg of a branched polypropylene-based resin is increased from 40°C to 220°C at a temperature increase rate of 10°C/minute so that the branched polypropylene-based resin is melted; (a2) thereafter, the temperature of the branched polypropylene-based resin melted is decreased from 220°C to 40°C at a temperature decrease rate of 10°C/min so that the branched polypropylene-based resin is crystallized; and (a3) thereafter, the temperature of the branched polypropylene-based resin crystallized is further increased from 40°C to 220°C at a temperature increase rate of 10°C/min. The temperature corresponding to the peak (melting peak) of the DSC curve, obtained in the second temperature increase (i.e., in (a3)), of the branched polypropylene-based resin can be determined as being the melting point of the branched polypropylene-based resin. Note that, in a case where as a result of carrying out the above-described method, there is more than one peak (melting peak) in the DSC curve, obtained in the second temperature increase, of the branched polypropylene-based resin, the temperature corresponding to a peak (melting peak) at which the quantity of melting heat is the greatest is defined as the melting point of the branched polypropylene-based resin. As the differential scanning calorimeter, a DSC6200 type available from Seiko Instruments Inc. can be used, for example.

The crystal amount ΔH, measured in the differential scanning calorimetry, of the branched polypropylene-based resin (A) is preferably not less than 70 J/g, more preferably not less than 75 J/g, and even more preferably not less than 80 J/g. The upper limit of the ΔH of the branched polypropylene-based resin (A) is not particularly limited. For example, the upper limit may be not more than 150 J/g, or may be not more than 120 J/g. The ΔH of the branched polypropylene-based resin (B) is preferably not less than 40 J/g and not more than 65 J/g, more preferably not less than 42 J/g and not more than 63 J/g, and even more preferably not less than 45 J/g and not more than 60 J/g. By using, in combination, the branched polypropylene-based resin (A) and the branched polypropylene-based resin (B) that have these crystal amounts ΔH, it is possible to provide a foamed molded product having an excellent balance between the static compressive strength and the tensile elongation at break.

In the present specification, the crystal amount ΔH of a branched polypropylene-based resins is a value calculated by carrying out the following (1) and (2) in sequence: (1) in a DSC curve, measured in the DSC method, of the branched polypropylene-based resin, the DSC curve being obtained in the second temperature increase (i.e., in (a3)), the point on the DSC curve that corresponds to 80°C is determined as A, and the point on the DSC curve that corresponds to the end of melting is determined as B; and (2) the quantity of heat (J/g) calculated from a region bounded by the line segment AB and the DSC curve is defined as ΔH.

Each of the branched polypropylene-based resins has a melt flow rate (MFR) that is not particularly limited. For example, the MFR of the branched polypropylene-based resin is preferably 0.3 g/10 minutes to 20.0 g/10 minutes, more preferably 0.5 g/10 minutes to 15.0 g/ 10 minutes, even more preferably 1.0 g/10 minutes to 12.0 g/10 minutes, and particularly preferably 1.5 g/10 minutes to 10.0 g/10 minutes. The MFR of the branched polypropylene-based resin being within the above range offers (a) the advantage that extruded expanded particles obtained are excellent in moldability and (b) the advantage that the extruded expanded particles are capable of providing a foamed molded product excellent in tensile elongation at break. The MFR of the branched polypropylene-based resin being (a) not less than 0.3 g/10 minutes offers the advantage that extruded expanded particles obtained with use of the branched polypropylene-based resin are capable of providing a foamed molded product which is less deformed and has good surface property (beautiful surface). The MFR of the branched polypropylene-based resin being (b) not more than 20.0 g/10 minutes offers the advantage that a composition which includes extruded expanded particles obtained with use of the branched polypropylene-based resin has good expandability at the time of extrusion expansion.

In the present specification, the MFR of a branched polypropylene-based resin is determined by measurement carried out under conditions of a temperature of 230°C and a load of 2.16 kg, in accordance with ISO 1133.

The branched polypropylene-based resins has a melt tension that is preferably 5 cN to 20 cN, more preferably 7 cN to 17 cN, and even more preferably 9 cN to 15 cN. The melt tension of the branched polypropylene being (a) not less than 5 cN offers the advantage that extruded expanded particles obtained with use of the branched polypropylene tend to have a low open cell ratio and is therefore capable of providing a foamed molded product which has a good surface property (beautiful surface). The melt tension of the branched polypropylene being (b) not more than 20 cN offers the advantage of easily increasing the discharge quantity at the time of extrusion expansion, that is, being excellent in productivity.

In the present specification, the melt tension of a branched polypropylene-based resin is measured with use of Capilograph 1D (manufactured by TOYO SEIKI SEISAKU-SHO, LTD, Japan). The details of the measurement are the following (1) to (5): (1) a barrel having a diameter of 9.55 mm that has been heated to a test temperature (200°C) is filled with a sample resin (branched polypropylene-based resin) for measurement; (2) subsequently, the sample resin is heated for 10 minutes within the barrel, which has been heated to the test temperature (200°C); (3) subsequently, while the sample resin is discharged in the form of a strand through a capillary die (opening diameter: 1.0 mm, length: 10 mm) at a piston lowering speed (10 mm/minutes) which is kept constant, this strand-like resin is passed through a tension detecting pulley located 350 mm below the capillary die, and thereafter, take-up of the strand-like resin with use of a take-up roll is started; (4) after the drawing of the strand-like resin becomes stable, the speed at which the strand-like resin is taken up is increased from an initial speed of 1.0 m/minute to a speed of 200 m/minute at a constant rate in 4 minutes; (5) a load acting on the pulley, which is equipped with a load cell, at a point in time when the strand-like resin fractures is measured as the melt tension.

It is preferable that at least one selected from the group consisting of the branched polypropylene-based resin (A) and the branched polypropylene-based resin (B) have a melt flow rate of 0.3 g/ 10 minutes to 20.0 g/ 10 minutes, and it is more preferable that both the branched polypropylene-based resin (A) and the branched polypropylene-based resin (B) have a melt flow rate of 0.3 g/10 minutes to 20.0 g/10 minutes. In addition, it is preferable that at least one selected from the group consisting of the branched polypropylene-based resin (A) and the branched polypropylene-based resin (B) have a melt tension of 5 cN to 20 cN, and it is more preferable that both the branched polypropylene-based resin (A) and the branched polypropylene-based resin (B) have a melt tension of 5 cN to 20 cN.

The branched polypropylene-based resin (A) and/or the branched polypropylene-based resin (B) is/are preferably at least one selected from the group consisting of a homopolypropylene-based resin with a branched structure, a random polypropylene-based resin with a branched structure, and a block polypropylene-based resin with a branched structure. The homopolypropylene-based resin with a branched structure means a propylene homopolymer having a branched structure introduced therein. Similarly, the random polypropylene-based resin with a branched structure and the block polypropylene-based resin with a branched structure mean a polypropylene-based random copolymer having a branched structure introduced therein and a polypropylene-based block copolymer having a branched structure introduced therein, respectively.

<2-2. Method for producing polypropylene-based resin with a branched structure>

The polypropylene-based resin with a branched structure (branched polypropylene-based resin) can be obtained by introducing a branched structure into the linear polypropylene-based resin. A method for introducing a branched structure into a linear polypropylene-based resin is not particularly limited, but examples of the method encompass (b1) a method of subjecting a linear polypropylene-based resin to irradiation and (b2) a method of melting and kneading a mixture that includes a linear polypropylene-based resin, a conjugated diene compound, and a radical polymerization initiator.

Note that as a raw material used in the method (b1) and the method (b2), a branched polypropylene-based resin may be used instead of a linear polypropylene-based resin. This makes it possible to obtain a branched polypropylene-based resin different in physical properties from the raw material branched polypropylene-based resin.

Examples of a specific method of the method (b1) encompass the method disclosed in Japanese Translation of PCT International Application, Tokuhyo, No. 2002-542360.

Here is a further description of the method (b2). In the method (b2), a branched polypropylene-based resin is obtained by, for example, carrying out the following (i) to (iv) in sequence: (i) a mixture of a linear polypropylene-based resin, a conjugated diene compound, and a radical polymerization initiator is melted and kneaded in a device provided with a die; (ii) a melted and kneaded product obtained is extruded through the die; (ii) the melted and kneaded product extruded (also referred to as a strand) is cooled; and (iv) the strand is chopped simultaneously with the cooling or after the cooling. Examples of a specific method of the method (b2) encompass the method disclosed in WO2020/004429.

In an embodiment of the present invention, the branched polypropylene-based resin is preferably a branched polypropylene-based resin obtained by the method (b2) because: (i) it is possible to stably introduce a branched structure into the linear polypropylene-based resin, and the reproducibility of introduction of a branched structure is high; and/or (ii) there is no need for complicated equipment and a branched polypropylene-based resin is obtained with high productivity. In other words, it is preferable that at least one selected from the group consisting of the branched polypropylene-based resin (A) and the branched polypropylene-based resin (B) have a structural unit derived from a conjugated diene compound, and it is more preferable that both the branched polypropylene-based resin (A) and the branched polypropylene-based resin (B) have a structural unit derived from a conjugated diene compound.

Examples of a method for producing the present resin composition encompass a method of introducing, by the method (b2), a branched structure into at least two types of linear polypropylene-based resins individually, to prepare the branched polypropylene-based resins (A) and (B) and then mixing the branched polypropylene-based resins (A) and (B), to obtain the present resin composition. Note that in producing the branched polypropylene-based resin (A) or (B), at least two types of linear polypropylene-based resins may be used as the raw material.

(Linear polypropylene-based resin)

The linear polypropylene-based resin may be (a) a homopolymer of propylene, or may be (b) a block copolymer or a random copolymer that is a copolymer of propylene and a monomer other than propylene, or may be (c) a mixture of at least two thereof.

The linear polypropylene-based resin may include, in addition to the propylene unit, a structural unit derived from a monomer other than a propylene monomer, in such a manner as to include the structural unit in a quantity of one or more units or as to include one or more types of the structural units. The "monomer other than a propylene monomer" used in producing the linear polypropylene-based resin can be referred to as a "comonomer". The "structural unit derived from the monomer other than a propylene monomer" included in the linear polypropylene-based resin can be referred to as a "comonomer unit".

Examples of such a comonomer encompass the following monomers: (a) an $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, or 1-decene; (b) a cyclic olefin such as cyclopentene, norbornene, or tetracyclo[6,2,11,8,13,6]-4-dodecene; (c) a diene such as 5-methylene-2-norbornene, 5-ethylidene-2-norbornene, 1,4-hexadiene, methyl-1,4-hexadiene, or 7-methyl-1,6-octadiene; and (d) a vinyl-based monomer such as vinyl chloride, vinylidene chloride, acrylonitrile, methacrylonitrile, vinyl acetate, acrylic acid, an acrylic ester, methacrylic acid, a methacrylic ester, maleic acid, maleic anhydride, a styrene-based monomer, vinyltoluene, or divinylbenzene.

Examples of the acrylic ester encompass methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic ester encompass methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomer encompass styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The linear polypropylene-based resin includes a comonomer unit which is preferably a structural unit derived from an $\alpha$-olefin having 2 or 4 to 12 carbon atoms, more preferably a structural unit derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit derived from ethylene, 1-butene, isobutene, 1-pentene, 3-methyl-1-butene, 1-hexene, and/or 4-methyl-1-pentene, even more preferably a structural unit derived from ethylene, 1-butene, isobutene, and/or 1-pentene, and more particularly preferably a structural unit derived from ethylene and/or 1-butene. This configuration offers the advantage that the branched polypropylene-based resin obtained is capable of providing polypropylene-based resin extruded expanded particles excellent in moldability.

The linear polypropylene-based resin is preferably a propylene-based homopolymer, a polypropylene-based block copolymer, and/or a polypropylene-based random copolymer, and more preferably a propylene homopolymer and/or a polypropylene-based random copolymer. This configuration offers the advantage that the branched polypropylene-based resin obtained is capable of providing polypropylene-based resin extruded expanded particles excellent in moldability.

The linear polypropylene-based resin includes the propylene unit in an amount which is preferably not less than 90 mol%, more preferably not less than 93 mol%, even more preferably not less than 95 mol%, and particularly preferably not less than 97 mol%, relative to 100 mol% of all structural units included in the linear polypropylene-based resin.

The linear polypropylene-based resin has a melting point that is not particularly limited. The melting point of the linear polypropylene-based resin is, for example, preferably 130°C to 165°C, more preferably 135°C to 164°C, even more preferably 138°C to 163°C, and particularly preferably 140°C to 162°C. The melting point of the linear polypropylene-based resin being within the above range offers (a) the advantage that extruded expanded particles obtained are excellent in moldability and (b) the advantage that the extruded expanded particles are capable of providing a foamed molded product excellent in resistance to breakage, (a) The melting point of the linear polypropylene-based resin being not less than 130°C offers the following advantages: there is no possibility of a decrease in the dimensional stability of the foamed molded product; there is no possibility of the foamed molded product having insufficient heat resistance; and the tendency of the foamed molded product to have an increased compressive strength, and (b) the melting point of the linear polypropylene-based resin being not more than 165°C, which allows the molding of the extruded expanded particles at a relatively low steam pressure, offers the advantage of allowing the molding of the extruded expanded particles with use of a general-purpose molding machine intended for polypropylene-based resin expanded particles.

In the present specification, the melting point of the linear polypropylene-based resin is determined by measurement in the DSC method. Specifically, the melting point of the linear polypropylene-based resin can be identified by a method the same as the above method for measuring the melting point of the branched polypropylene-based resin, except that the linear polypropylene-based resin is used instead of the branched polypropylene-based resin.

The linear polypropylene-based resin has a MFR that is not particularly limited. The MFR of the linear polypropylene-based resin is, for example, preferably 0.5 g/10 minutes to 20.0 g/10 minutes, more preferably 1.0 g/10 minutes to 15.0 g/10 minutes, even more preferably 2.0 g/10 minutes to 12.0 g/10 minutes, and particularly preferably 2.0 g/10 minutes to 10.0 g/10 minutes.

In the present specification, the MFR of the linear polypropylene-based resin is determined by measurement carried out under conditions of a temperature of 230°C and a load of 2.16 kg, in accordance with ISO 1133.

(Conjugated diene compound)

Examples of the conjugated diene compound encompass butadiene, isoprene, 1,3-heptadiene, 2,3-dimethylbutadiene, and 2,5-dimethyl-2,4-hexadiene. One of these conjugated diene compounds may be used singly, or two or more of these diene compounds may be used in combination. Among these conjugated diene compounds, butadiene and isoprene are particularly preferable in terms of (a) inexpensiveness and handleability and (b) making a reaction easy to proceed uniformly.

The amount of the conjugated diene compound used in producing the branched polypropylene-based resins is preferably 0.01 parts by weight to 5.00 parts by weight, more preferably 0.10 parts by weight to 3.00 parts by weight, and even more preferably 0.10 parts by weight to 2.00 parts by weight, relative to 100 parts by weight of the linear polypropylene-based resin. When the amount of the conjugated diene compound used is greater, the branched polypropylene-based resin obtained tends to have a smaller MFR and a lower nominal tensile strain at break. Conversely, when the amount of the conjugated diene compound used is smaller, the branched polypropylene-based resin obtained tends to have a greater MFR and a higher nominal tensile strain at break.

In the production of the branched polypropylene-based resin, a monomer copolymerizable with the conjugated diene compound may be used in addition to the linear polypropylene-based resin, the conjugated diene compound, and the radical polymerization initiator, to the extent that the effect of an embodiment of the present invention is not impaired. Examples of the monomer copolymerizable with the conjugated diene compound encompass (a) an acrylic ester such as vinyl chloride, vinylidene chloride, acrylonitrile, methacrylonitrile, acrylamide, methacrylamide, vinyl acetate, acrylic acid, methacrylic acid, maleic acid, maleic anhydride, acrylic metal salt, methacrylic metal salt, methyl acrylate, ethyl acrylate, butyl acrylate, 2-ethylhexyl acrylate, or stearyl acrylate; and (b) a methacrylic ester such as methyl methacrylate, ethyl methacrylate, butyl methacrylate, 2-ethylhexyl methacrylate, or stearyl methacrylate.

(Radical polymerization initiator)

The radical polymerization initiator is an organic peroxide having an ability to abstract hydrogen from a linear polypropylene-based resin and a conjugated diene compound. Examples of the radical polymerization initiator which is suitably used in an embodiment of the present invention encompass organic peroxides such as ketone peroxide, peroxy ketal, hydroperoxide, dialkyl peroxide, diacyl peroxide, peroxy dicarbonate, and peroxy ester.

In particular, the organic peroxide is preferably an organic peroxide that has high hydrogen abstraction ability. Preferred examples of the organic peroxide having high hydrogen abstraction ability encompass peroxy ketals such as 1,1-bis(t-butyl peroxy)3,3,5-trimethylcyclohexane, 1,1-bis(t-butyl peroxy)cyclohexane, n-butyl 4,4-bis(t-butyl peroxy)valerate, and 2,2-bis(t-butyl peroxy)butane; dialkyl peroxides such as dicumyl peroxide, 2,5-dimethyl-2,5-di(t-butyl peroxy)hexane, a,a'-bis(t-butyl peroxy-m-isopropyl) benzene, t-butyl cumyl peroxide, di-t-butyl peroxide, and 2,5-dimethyl-2,5-di(t-butyl peroxy)-3-hexyne; a diacyl peroxide such as benzoyl peroxide; peroxy esters such as t-butyl peroxy octoate, t-butyl peroxy isobutyrate, t-butyl peroxy laurate, t-butyl peroxy 3,5,5-trimethylhexanoate, t-butylperoxy isopropyl carbonate, 2,5-dimethyl-2,5-di(benzoyl peroxy)hexane, t-butyl peroxy acetate, t-butyl peroxy benzoate, and di-t-butyl peroxy isophthalate. Among these organic peroxides, t-butylperoxy isopropyl carbonate and/or t-butyl peroxy benzoate are/is preferable. One of these organic peroxides may be used singly, or two or more of these organic peroxides may be used in combination.

The amount of the radical polymerization initiator used in producing the branched polypropylene-based resins are not particularly limited, but may be preferably 0.01 parts by weight to 5.00 parts by weight, more preferably 0.10 parts by weight to 3.00 parts by weight, even more preferably 0.10 parts by weight to 2.00 parts by weight, and particularly preferably 0.10 parts by weight to 1.00 part by weight, relative to 100 parts by weight of the linear polypropylene-based resin. When the amount of the radical polymerization initiator used is greater, the branched polypropylene-based resin obtained tends to have a higher MFR. Conversely, the amount of the radical polymerization initiator used is smaller, the branched polypropylene-based resin obtained tends to have a lower MFR.

<2-3. Another component>

The present resin composition may further include, as necessary, (a) a stabilizer such as an antioxidant, a metal deactivator, a phosphorous processing stabilizer, an ultraviolet absorber, an ultraviolet stabilizer, a fluorescent brightening agent, metallic soap, or an antacid adsorbent, and/or (b) an additive such as a cell nucleating agent, an inorganic coloring agent, an organic coloring agent, a lubricant, a plasticizer, a filler, a reinforcer, a flame retardant, or an antistatic agent. One of these components may be used singly, or two or more of these components may be used in combination.

The present resin composition may include a cell nucleating agent. In other words, a cell nucleating agent may be used in producing the present extruded expanded particles. By using the cell nucleating agent, it is possible to control the number and shape of cells of the extruded expanded particles obtained.

Examples of the cell nucleating agent can encompass a sodium bicarbonate-citric acid mixture, monosodium citrate, talc, and calcium carbonate. One of these cell nucleating agents may be used singly, or two or more of these cell nucleating agents may be used in combination.

The amount of the cell nucleating agent contained in the present resin composition, which is, in other words, the amount of the cell nucleating agent used in producing the extruded expanded particles, is not particularly limited. For example, the amount of the cell nucleating agent contained is preferably 0.01 parts by weight to 5.00 parts by weight, more preferably 0.01 parts by weight to 3.50 parts by weight, even more preferably 0.01 parts by weight to 1.00 part by weight, and particularly preferably 0.01 parts by weight to 0.50 parts by weight, relative to 100 parts by weight of all resin components. This configuration offers the advantage that the extruded expanded particles have a uniform cell size (average cell diameter) and a uniform cell shape, and as a result, expandability at the time of extrusion expansion is easily stabilized. Note that the "cell" is intended to mean an "air bubble".

The present resin composition may include an inorganic coloring agent to the extent that the effect of an embodiment of the present invention is not impaired. The inorganic coloring agent can include a whitish coloring agent in addition to, for example, blackish, reddish, greenish, bluish, and yellowish coloring agents. Examples of the inorganic coloring agent encompass carbon black, red ocher, yellow ocher, green ocher, titanium oxide, cobalt blue, Prussian blue, and chromic oxide green. One of these inorganic coloring agents may be used singly, or two or more of these inorganic coloring agents may be used in combination. From the viewpoint of ultraviolet absorption performance, the inorganic coloring agent is particularly preferably carbon black.

The present resin composition includes the inorganic coloring agent in an amount that is preferably 0.5 parts by weight to 5.0 parts by weight, more preferably 0.5 parts by weight to 4.5 parts by weight, more preferably 0.5 parts by weight to 4.0 parts by weight, even more preferably 1.0 part by weight to 3.5 parts by weight, and particularly preferably 1.0 part by weight to 3.0 parts by weight, relative to 100 parts by weight of all resin components. This configuration offers the advantage that extruded expanded particles obtained by an extrusion foaming method tends to have a low open cell ratio. Note that it can be said that the amount of the inorganic coloring agent contained in the present resin composition is the amount of the inorganic coloring agent used in producing the extruded expanded particles.

The present resin composition may include an organic coloring agent to the extent that the effect of an embodiment of the present invention is not impaired. Examples of the organic coloring agent encompass perylene-based organic pigments, azo-based organic pigments, quinacridone-based organic pigments, phthalocyanine-based organic pigments, threne-based organic pigments, dioxazine-based organic pigments, and isoindoline-based organic pigments. One of these organic coloring agent may be used singly, or two or more of these inorganic coloring agents may be used in combination. The amount of the organic coloring agent contained in the present resin composition is not particularly limited.

The present resin composition may further include a resin (which can be referred to as another resin) other than the branched polypropylene-based resin or rubber, to the extent that the effect of an embodiment of the present invention is not impaired. Examples of the another resin other than the branched polypropylene-based resin encompass (a) a linear polypropylene-based resin such as an ethylene/propylene random copolymer, an ethylene/propylene block copolymer, or a propylene homopolymer, (b) an ethylene-based resin such as high-density polyethylene, medium-density polyethylene, low-density polyethylene, linear low-density polyethylene, linear very-low-density polyethylene, an ethylene/vinyl acetate copolymer, an ethylene/acrylic acid copolymer, or an ethylene/methacrylic acid copolymer and (c) a styrene-based resin such as polystyrene, a styrene/maleic anhydride copolymer, or a styrene/ethylene copolymer. Examples of the rubber encompass olefin-based rubber such as ethylene/propylene rubber, ethylene/butene rubber, ethylene/hexene rubber, or ethylene/octene rubber. The present resin composition may include the another resin in amount of 0 weight% to 20 weight% per 100 weight% of all resin components of the present resin composition.

[3. Polypropylene-based resin extruded expanded particles]

The polypropylene-based resin extruded expanded particles in accordance with an embodiment of the present invention can be obtained by extrusion expansion of the present resin composition. It can be said that the present extruded expanded particles include the present resin composition. It can be said that as a base resin, the present resin composition is included in the present extruded expanded particles. It can be said that the base resin is a resin component that substantially constitutes the extruded expanded particles.

(Average cell diameter)

The average cell diameter of the present extruded expanded particles is preferably 100 $\mu$m to 400 $\mu$m, more preferably 120 um to 350 pm, and even more preferably 150 $\mu$m to 300 $\mu$m. With this configuration, cells rarely break to shrink at the time of molding of the extruded expanded particles. Thus, the configuration offers the advantage that the extruded expanded particles are excellent in moldability.

In the present specification, specifically, the average cell diameter of the polypropylene-based resin extruded expanded particles is calculated by carrying out the following (1) to (4) in sequence: (1) the extruded expanded particle is cut with a razor such that the razor passes through the center of the extruded expanded particle; (2) a cut surface obtained is observed with use of a light microscope; (3) the number of cells present in a 2000-$\mu$m straight line on the cut surface is counted. The numbers of cells of 10 extruded expanded particles are measured, and the arithmetic average of the numbers of cells are calculated; and (4) the average cell diameter (which therefore can be a mean area diameter as well) of the extruded expanded particles is determined by measurement with use of the formula below:

$$\text{Average cell diameter (μm)} = 2000 \text{ / average number of cells.}$$

(Open cell ratio)

It is more preferable that the present extruded expanded particles have a lower open cell ratio. The open cell ratio of the present extruded expanded particles is preferably not more than 15%, more preferably not more than 10%, even more preferably not more than 7%, and particularly preferably not more than 5%. The lower limit of the open cell ratio of the present extruded expanded particles is not particularly limited, but is, for example, not less than 0%. This configuration offers the following advantages (a) and (b): (a) cells rarely break to shrink at the time of the molding of the extruded expanded particles, and the extruded expanded particles are thus excellent in moldability; and (b) the foamed molded product obtained with use of the extruded expanded particles exhibits, to a greater degree, characteristics such as the property of being formed in any shape, shock-absorbing properties, lightweight properties, compressive strength, and heat insulating properties.

In the present specification, the open cell ratio of the extruded expanded particles is determined by measurement with use of an air-comparison pycnometer [Model 1000, available from TOKYO SCIENCE CO., LTD.] in accordance with the methods described in PROCEDURE C of ASTM D2856-87. Specifically, the open cell ratio of the extruded expanded particles is calculated by carrying out the following (1) to (4) in sequence: (1) the volume Vc ($cm^3$) of the extruded expanded particles is measured with use of the air-comparison pycnometer; (2) subsequently, all of the extruded expanded particles after the measurement of the Vc are submerged in ethanol contained in a graduated cylinder; (3) thereafter, the apparent volume Va ($cm^3$) of the extruded expanded particles is determined from the amount of increase in the level of the ethanol in the graduated cylinder; and (4) the open cell ratio of the extruded expanded particles is calculated by the following formula: The open cell ratio (%) = ((Va - Vc) x 100) / Va. This method of measuring the volume Va is also referred to as a submersion method.

(Bulk density)

The present extruded expanded particles have a bulk density which is preferably not less than 40 g/L, preferably not less than 50 g/L, more preferably not less than 60 g/L, even more preferably not less than 70 g/L, and particularly preferably not less than 80 g/L. The upper limit of the bulk density of the present extruded expanded particles is not particularly limited, but is, for example, not more than 300 g/L. When the extruded expanded particles, which are the material of a foamed molded product, have a lower expanding ratio, a foamed molded product obtained tends to have a lower tensile elongation at break. Because of having this configuration, the present extruded expanded particles have the advantage of being capable of providing a foamed molded product excellent in tensile elongation at break even when having such a low expanding ratio as to have a bulk density of not less than 40 g/L. In addition, the bulk density of the extruded expanded particles being within the above range offers the advantage that a foamed molded product obtained with use of the extruded expanded particles exhibits characteristics such as the property of being formed in any shape, shock-absorbing properties, lightweight properties, and heat insulating properties, to a greater degree.

In the present specification, the bulk density of the extruded expanded particles is calculated by carrying out the following (1) to (3) in sequence: (1) a container having a known volume V (L), such as, for example, a graduated cylinder, a beaker, or a bucket, is filled with the extruded expanded particles to the brim; (2) the powder surface (the top surface) of the container is leveled, and the weight W (g) of the extruded expanded particles inside the container is measured; and (3) the bulk density of the extruded expanded particles is calculated from the following formula:

$$\text{Bulk density (g/L)} = \text{weight W (g) of extruded expanded particles / volume V (L) of container.}$$

(Molding range)

The present extruded expanded particles have the advantage of a broad molding range (e.g., more than 0). In the present specification, the extruded expanded particles having a greater molding range is intended to mean that the extruded expanded particles have more excellent moldability. In the present specification, the "molding range of extruded expanded particles" is intended to mean a range of steam pressures (gage pressures) during in-mold foam molding, the range allowing, when in-mold foam molding of the extruded expanded particles is carried out, provision of a foamed molded product which satisfies the following: a foamed molded product: (x1) in which the extruded expanded particles are sufficiently fused together (e.g., the rate of fusion is not less than 80%); (x2) which has a gap between the extruded expanded particles sufficiently filled; (x3) which has a beautiful surface; (x4) the surface of which is unmelted; and (x5) to which the shape of a mold used for the in-mold foam molding is transferred without a shrinkage of 5% or more of the size of the mold. In a case where the foamed molded product sticks to the mold so as not to be taken out, determination of failure to obtain a foamed molded product is made. In the present specification, for example, when in-mold foam molding of the extruded expanded particles is carried out, in a case where a steam pressure during the in-mold foam molding, the steam pressure allowing provision of a foamed molded product that satisfies the above (x1) to (x5), ranges from P1 to P2, the "value" obtained by a subtraction of P2 - P1 is defined as the "molding range of extruded expanded particles". In the present specification, the range "P1 to P2" is also referred to as a "workable steam pressure range".

In a case where the steam pressure is excessively low for the extruded expanded particles, the following foamed molded product could be obtained: (a) the extruded expanded particles are insufficiently fused together; (b) a gap between the extruded expanded particles is not sufficiently filled; (c) the foamed molded product has poor surface appearance; and/or (d) as a result of shrinkage, the shape of a mold used for in-mold foam molding is not transferred to the foamed molded product. In a case where the steam pressure is excessively high for the extruded expanded particles, the following foamed molded product could be obtained: (a) the foamed molded product has a melted surface and/or (b) the foamed molded product has insufficient compressive strength.

The workable steam pressure range of the present extruded expanded particles is not particularly limited. It is more preferable that the present extruded expanded particles have a broader molding range. The molding range of the present extruded expanded particles is more preferably not less than 0.02 MPa, more preferably not less than 0.03 MPa, even more preferably not less than 0.04 MPa, and particularly preferably not less than 0.05 MPa.

(Crystallization peak)

The extruded expanded particles obtained by an extrusion foaming method have the characteristic that a single crystallization peak is present in a DSC curve of the extruded expanded particles obtained by DSC measurement. In other words, it is highly probable that polypropylene-based resin expanded particles having a single crystallization peak in a DSC curve of the extruded expanded particles obtained by DSC measurement are those obtained by an extrusion foaming method. The present extruded expanded particles also can have a single crystallization peak in a DSC curve of the extruded expanded particles obtained by DSC measurement.

In the present specification, the DSC curve of extruded expanded particles used for calculation of the crystallization peak is a curve obtained in the period during which the temperature of 5 mg to 6 mg of the extruded expanded particles are increased from 40 to 220°C at a temperature increase rate of 10°C / minute in the DSC measurement.

[4. Method for producing polypropylene-based resin extruded expanded particles]

The method for producing the present extruded expanded particles is not particularly limited, but a known extrusion foaming method can be employed. For example, the method for producing the present extruded expanded particles includes a first step of melting and kneading the present resin composition and a blowing agent in a production device, and a second step of discharging, through a die, a melted and kneaded product obtained in the first step, to a region having a pressure lower than an internal pressure of the production device.

(First step)

Here is a detailed description of the first step. Specific examples of the first step encompass a step of melting the present resin composition and dissolving a blowing agent in the present resin composition, in the production device. It can be said that the first step is a step of preparing a melted and kneaded product that includes the present resin composition and a blowing agent.

The blowing agent is not particularly limited, but a known organic and inorganic blowing agents can be used. Examples of the organic blowing agent encompass an aliphatic hydrocarbon such as propane and a fluorinated hydrocarbon such as difluoroethane. Examples of the inorganic blowing agent encompass an inorganic gas such as carbon dioxide, air, or nitrogen, and water. One of these blowing agents may be used singly, or two or more of these blowing agents may be used in combination. The amount of the blowing agent used in the first step may be adjusted as appropriate according to the type of blowing agent and according to a target expanding ratio of the polypropylene-based resin extruded expanded particles.

In the first step, the following may further be used as necessary: a stabilizer (such as, for example, an antioxidant, a metal deactivator, a phosphorous processing stabilizer, an ultraviolet absorber, an ultraviolet stabilizer, a fluorescent brightening agent, metallic soap, or an antacid adsorbent); and an additive (such as, for example, a cell nucleating agent, an inorganic coloring agent, an organic coloring agent, a crosslinking agent, a chain transfer agent, a lubricant, a plasticizer, a filler, a reinforcer, a pigment, a dye, a flame retardant, or an antistatic agent).

The inorganic coloring agent may be blended (used) as a masterbatch. The inorganic coloring agent masterbatch can be obtained by mixing the inorganic coloring agent and any given optional resin (e.g., a polypropylene-based resin) in any given ratio. The concentration of the inorganic coloring agent in the masterbatch is not particularly limited. For example, the masterbatch may include the inorganic coloring agent in an amount of 5 weight% to 50 weight% per 100 weight% of the masterbatch.

In the first step, the present resin composition, the blowing agent, and another component that can be optionally used may be mixed before being fed to the production device, or may be mixed in the production device. In other words, in the first step, the present resin composition may be fed to the production device, or may be prepared (completed) in the production device. In the first step, there are no particular limitation to (i) the method and order in which the present resin composition, the blowing agent, and another component that can be optionally used are mixed, or (ii) the method and order in which the present resin composition, the blowing agent, and another component that can be optionally used are fed to the production device.

Before being extruded to a low pressure region, the melted and kneaded product obtained in the first step may be cooled.

(Second step)

The second step is a step of extruding, through a die, the melted and kneaded product obtained in the first step, to a region having a pressure lower than the internal pressure of the production device, and chopping the melted and kneaded product extruded. Extruded expanded particles are obtained through the second step. Thus, it can be said that the second step is a granulation step of granulating the polypropylene-based resin extruded expanded particles.

In the second step, the region where the melted and kneaded product obtained in the first step is extruded is not particularly limited, provided that the pressure of the region is lower than the internal pressure of the production device. For example, in the second step, the melted and kneaded product obtained in the first step may be extruded to a gas phase, or may be extruded to a liquid phase.

The melted and kneaded product extruded to the region having a pressure lower than the internal pressure of the production device in the second step immediately begins to expand. In the second step, the melted and kneaded product which is expanding may be chopped, or the melted and kneaded product which has finished expanding may be chopped. In a case where the melted and kneaded product which is expanding is chopped, the chopped melted and kneaded product can complete expanding in the region where the melted and kneaded product is extruded.

Depending on the region where the melted and kneaded product obtained in the first step is extruded and the method of chopping the melted and kneaded product extruded, the second step (granulation step) can be roughly classified as either of two methods which are a cold cutting method and a die face cutting method. The cold cutting method encompasses a method in which (i) a blowing agent-containing melted and kneaded product which has been extruded through a die is expanded and (ii) a strand of expanded body is taken up while passing through a water tank to cool, and then chopped (strand cut method). The die face cutting method is a method in which the melted and kneaded product which has been extruded from a hole of die is cut with use of a cutter which rotates while being in contact with a die surface or while having a small amount of clearance left between the cutter and the die surface.

The die face cutting method is further classified on the basis of a difference in cooling method, as one of the following three methods: i.e., an underwater cutting (which can hereinafter be referred to as "UWC") method; a watering cutting (which can hereinafter be referred to as "WRC") method; and a hot cutting (which can hereinafter be referred to as "HC") method. The UWC method is a method in which a chamber attached to an end of a die is filled with a cooling water adjusted to have a predetermined pressure, such that the cooling water is in contact with a resin discharge surface of the die, and a melted and kneaded product which has been extruded through a hole of the die is cut in the water. The WRC method is a method in which a cooling drum that is connected to a die and that has an inner peripheral surface along which cooling water flows is disposed downstream of the die, and a melted and kneaded product which has been cut with the cutter in the air is cooled in the cooling water while expanding or after expansion. The HC method is a method in which a melted and kneaded product is cut with a cutter in the air, and the melted and kneaded product cut is cooled in the air while expanding or after expansion. The HC method also encompasses a mist cutting method that further includes a step of spraying mixed water-air mist. The method for chopping the melted and kneaded product discharged in the second step is preferably at least one selected from the group consisting of the HC method, the WRC method, and the UWC method.

[5. Polypropylene-based resin foamed molded product]

A polypropylene-based resin foamed molded product in accordance with an embodiment of the present invention is obtained by in-mold foam molding of the present extruded expanded particles described in the section [3. Polypropylene-based resin extruded expanded particles] or extruded expanded particles obtained by the production method described in the section [4. Method for producing polypropylene-based resin extruded expanded particles]. The in-mold foam molding method is not particularly limited, but a known method can be employed.

(Density of foamed molded product)

The present foamed molded product has a density that is preferably 60 g/L to 300 g/L, more preferably 70 g/L to 300 g/L, even more preferably 80 g/L to 300 g/L, and particularly preferably 90 g/L to 300 g/L. This configuration offers the advantage that the foamed molded product is more excellent in characteristics such as the property of being formed in any shape, shock-absorbing properties, lightweight properties, and heat insulating properties.

In the present specification, the density of the foamed molded product is calculated by carrying out the following (1) to (3) in sequence: (1) the weight W1 (g) of the foamed molded product is measured; (2) the volume V1 (L) of the foamed molded product is measured. The volume V1 can be determined by, for example, submerging the foamed molded product in water in a container full of the water, and measuring the amount of water flowed over the edge of the container. In a case of a foamed molded product of a plate shape, the volume V1 may be calculated from the respective dimensions of length, width, and thickness. (3) A density is calculated from the formula W1 / V1. Note that a foamed molded product used in the measurement is the one having been sufficiently dried after molding and then caused to stand for not less than 24 hours in an environment where the room temperature is 23°C and the humidity is 50%.

(Static compressive strength)

The present foamed molded product preferably has a static compressive strength that satisfies Expression 2:

$$\text{Static compressive strength (kPa)} \geq 0.000049 \times D^3 + 0.0542 \times D^2 - 0.265 \times D + 146.9 \cdots \text{(Expression 2)},$$

where D of Expression 2 represents the density (g/L) of the polypropylene-based resin foamed molded product.

In the present specification, the static compressive strength of the foamed molded product is measured by the following method. A specimen is cut from the foamed molded product, the specimen being 50 mm in length, 50 mm in width, and 50 mm in thickness. Note that, in relation to faces perpendicular to the thickness direction of the foamed molded product, only one of the faces is subjected to the cutting. This means that the other of faces perpendicular to the thickness direction of the foamed molded product, which is not subjected to the cutting, is the face (also referred to as a skin layer) that had been in contact with the mold during the in-mold foam molding. The value of the compressive stress at 50% compression of the specimen is measured for compression at a rate of 10% of the thickness per minute (approximately 5 mm/minute), with use of a tension and compression testing machine (e.g., TG-50kN manufactured by MinebeaMitsumi Inc.), in compliance with ISO 844. A value thereby obtained is defined as the static compressive strength of the foamed molded product.

(Tensile elongation at break)

The present foamed molded product has the advantage of having a great tensile elongation at break. In the present specification, it is intended that when a foamed molded product has a greater tensile elongation at break, the foamed molded product is more excellent in breakage resistance.

The present foamed molded product preferably has a tensile elongation at break that satisfies Expression 1:

$$\text{Tensile elongation at break (\%)} \geq -0.000002 \times D^3 + 0.0011 \times D^2 - 0.285 \times D + 32.2 \cdots \text{(Expression 1)},$$

where D of Expression 1 represents the density (g/L) of the foamed molded product.

In the present specification, the tensile elongation at break (%) of a foamed molded product is defined as a value obtained by determination from the result of a tensile test carried out with use of a foamed molded product as a sample, in accordance with ISO 1798. Specifically, in the tensile test with use of the foamed molded product, the percentage of the tensile elongation at the point of break of the foamed molded product is measured, and the measurement value is determined as being the tensile elongation at break (%) of the foamed molded product. It is preferable that the tensile elongation at break of the foamed molded product satisfy Expression 1 and the static compressive strength of the foamed molded product satisfy Expression 2.

A foamed molded product in accordance with an embodiment of the present invention encompasses a polypropylene-based resin foamed molded product that is prepared by molding extruded expanded particles obtained by extrusion expansion of a resin composition which includes a polypropylene-based resin with a branched structure, the extruded expanded particles having an open cell ratio of not more than 15%, the foamed molded product having a density of 60 g/L to 300 g/L, the foamed molded product having a tensile elongation at break which satisfies Expression 1 and a static compressive strength which satisfies Expression 2:

$$\text{Tensile elongation at break (\%)} \geq -0.000002 \times D^3 + 0.0011 \times D^2 - 0.285 \times D + 32.2 \cdots \text{(Expression 1),}$$

$$\text{Static compressive strength (kPa)} \geq 0.000049 \times D^3 + 0.0542 \times D^2 - 0.265 \times D + 146.9 \cdots \text{(Expression 2),}$$

where D of Expression 1 and Expression 2 represents the density (g/L) of the foamed molded product.

The resin composition may be the present resin composition described above, and the extruded expanded particles may be the present extruded expanded particles described above.

An embodiment of the present invention may have the following configurations.

<1> A polypropylene-based resin composition for extrusion foaming including: relative to 100 weight% of all resin components of the polypropylene-based resin composition for extrusion foaming, a polypropylene-based resin (A) with a branched structure in an amount of not less than 65 weight% and not more than 85 weight%, the polypropylene-based resin (A) with a branched structure having a tensile modulus defined in JIS K 7161 of not less than 1100 MPa and not more than 3000 MPa; and a polypropylene-based resin (B) with a branched structure in an amount of not less than 15 weight% and not more than 35 weight%, the polypropylene-based resin (B) with a branched structure having a tensile modulus defined in JIS K 7161 of not less than 550 MPa and not more than 950 MPa and a nominal tensile strain at break defined in JIS K 7161 of not less than 50% and not more than 500%.

<2> The polypropylene-based resin composition for extrusion foaming described in <1>, in which the polypropylene-based resin (A) with a branched structure has a melting point of not less than 145°C and not more than 170°C, and the polypropylene-based resin (B) with a branched structure has a melting point of not less than 120°C and less than 145°C.

<3> The polypropylene-based resin composition for extrusion foaming described in <1> or <2>, in which the polypropylene-based resin (A) with a branched structure has a crystal amount ∆H measured by differential scanning calorimetry of not less than 70 J/g and not more than 150 J/g and the polypropylene-based resin (B) with a branched structure has a crystal amount ∆H measured by differential scanning calorimetry of not less than 40 J/g and not more than 65 J/g.

<4> The polypropylene-based resin composition for extrusion foaming described in any one of <1> to <3>, in which the polypropylene-based resin (A) with a branched structure has a nominal tensile strain at break defined in JIS K 7161 of not less than 5% and less than 50%.

<5> The polypropylene-based resin composition for extrusion foaming described in any one of <1> to <4>, in which at least one selected from the group consisting of the group consisting of the polypropylene-based resin (A) with a branched structure and the polypropylene-based resin (B) with a branched structure has a melt tension of 5 cN to 20 cN.

<6> The polypropylene-based resin composition for extrusion foaming described in any one of <1> to <5>, in which at least one selected from the group consisting of the polypropylene-based resin (A) with a branched structure and the polypropylene-based resin (B) with a branched structure includes a structural unit derived from a conjugated diene compound.

<7> The polypropylene-based resin composition for extrusion foaming described in any one of <1> to <6>, in which at least one selected from the group consisting of the polypropylene-based resin (A) with a branched structure and the polypropylene-based resin (B) with a branched structure has a melt flow rate of 0.3 g/10 minutes to 20.0 g/10 minutes.

<8> The polypropylene-based resin composition for extrusion foaming described in any one of <1> to <7>, in which the polypropylene-based resin (A) with a branched structure and/or the polypropylene-based resin (B) with a branched structure is/are at least one selected from the group consisting of a homopolypropylene-based resin with a branched structure, a random polypropylene-based resin with a branched structure, and a block polypropylene-based resin with a branched structure.

<9> Polypropylene-based resin extruded expanded particles which are obtained by extrusion expansion of the polypropylene-based resin composition for extrusion foaming described in any one of <1> to <8>.

<10> The polypropylene-based resin extruded expanded particles described in <9>, in which the polypropylene-based resin extruded expanded particles have an average cell diameter of not less than 100 pm and not more than 400 pm.

<11> The polypropylene-based resin extruded expanded particles described in <9> or <10>, in which the polypropylene-based resin extruded expanded particles have an open cell ratio of not more than 15%.

<12> The polypropylene-based resin extruded expanded particles described in any one of <9> to <11>, in which the polypropylene-based resin extruded expanded particles have a bulk density of not less than 40 g/L and not more than 300 g/L.

<13> The polypropylene-based resin extruded expanded particles described in any one of <1> to <12>, in which a single crystallization peak is present in a DSC curve of the extruded expanded particles, the DSC curve being obtained in DSC measurement.

<14> A method for producing polypropylene-based resin extruded expanded particles including: a first step of melting and kneading the polypropylene-based resin composition for extrusion foaming described in any one of <1> to <8> and a blowing agent in a production device; and
a second step of discharging, through a die, a melted and kneaded product obtained in the first step, to a region having a pressure lower than an internal pressure of the production device.

<15> The method described in <14>, in which the blowing agent is at least one selected from the group consisting of an aliphatic hydrocarbon, a fluorinated hydrocarbon, carbon dioxide, air, nitrogen, and water.

<16> The method described in <14> or <15>, in which a method for chopping the melted and kneaded product discharged in the second step is at least one selected from the group consisting of a hot cutting method, a watering cutting method, and an underwater cutting method.

<17> A polypropylene-based resin foamed molded product which is obtained by in-mold foam molding of the polypropylene-based resin extruded expanded particles described in any one of <9> to <13>.

<18> The polypropylene-based resin foamed molded product described in < 17>, in which the polypropylene-based resin foamed molded product has a tensile elongation at break that satisfies Expression 1 and a static compressive strength that satisfies Expression 2:

$$\text{Tensile elongation at break (\%)} \geq -0.000002 \times D^3 + 0.0011 \times D^2 - 0.285 \times D + 32.2 \cdots \text{(Expression 1)},$$

$$\text{Static compressive strength (kPa)} \geq 0.000049 \times D^3 + 0.0542 \times D^2 - 0.265 \times D + 146.9 \cdots \text{(Expression 2)},$$

where D of Expression 1 and Expression 2 represents the density (g/L) of the polypropylene-based resin foamed molded product.

<19> A polypropylene-based resin foamed molded product that is prepared by molding extruded expanded particles obtained by extrusion expansion of a resin composition which includes a polypropylene-based resin with a branched structure, the extruded expanded particles having an open cell ratio of not more than 15%, the polypropylene-based resin foamed molded product having a density of 60 g/L to 300 g/L, the polypropylene-based resin foamed molded product having a tensile elongation at break which satisfies Expression 1 and a static compressive strength which satisfies Expression 2:

$$\text{Tensile elongation at break (\%)} \geq -0.000002 \times D^3 + 0.0011 \times D^2 - 0.285 \times D + 32.2 \cdots \text{(Expression 1)},$$

$$\text{Static compressive strength (kPa)} \geq 0.000049 \times D^3 +$$

$$0.0542 \times D^2 - 0.265 \times D + 146.9 \cdots \text{(Expression 2)},$$

where D of Expression 1 and Expression 2 represents the density (g/L) of the polypropylene-based resin foamed molded product.

Examples

An embodiment of the present invention will be described below in more detail through Examples. Note that the present invention is not limited to Examples below.

[Measurement and evaluation method]

<MFR>

The MFR of a branched polypropylene-based resin used in each of Examples and Comparative Examples was determined by measurement carried out: with use of the resin as a sample; in compliance with the stipulations of Procedure B described in ISO 1133 (1997); with use of Melt Indexer S-01 (manufactured by TOYO SEIKI SEISAKU-SHO, LTD); and under conditions of a temperature of 230°C and a load of 2.16 kg. The MFR was determined as being the value obtained by conversion into the weight of the sample discharged through an orifice per 10 minutes on the basis of: a distance obtained by measurement of the travel distance of the piston of the Melt Indexer S-01 during a certain amount of time; and the density of the sample at the temperature of the measurement. Note that the certain amount of time was 120 seconds in a case where the melt flow rate was more than 0.1 g/ 10 minutes and not more than 1.0 g/10 minutes, 60 seconds in a case where the melt flow rate was more than 1.0 g/ 10 minutes and not more than 3.5 g/10 minutes, or 30 seconds in a case where the melt flow rate was more than 3.5 g/ 10 minutes and not more than 30.0 g/ 10 minutes.

<Melting point>

The melting point of a branched polypropylene-based resin used in each of Examples and Comparative Examples was measured by differential scanning calorimetry with use of the branched polypropylene-based resin as a sample. As a differential scanning calorimeter, a DSC6200 type manufactured by Seiko Instruments Inc. was used. The method for measuring the melting point by differential scanning calorimetry was as follows: (a1) the temperature of the sample was increased from 40°C to 220°C at a temperature increase rate of 10°C/minute so that the sample melted; (a2) thereafter, the temperature of the sample obtained was decreased from 220°C to 40°C at a temperature decrease rate of 10°C/minute so that the sample was crystallized; (a3) thereafter, the temperature of the sample crystallized was further increased from 40°C to 220°C at a temperature increase rate of 10°C/minute. The temperature corresponding to the peak (melting peak) of a DSC curve of the sample that is obtained in the second temperature increase (i.e., in (a3)) was determined as being the melting point of the sample.

<Tensile modulus and nominal tensile strain at break>

The tensile modulus and nominal tensile strain at break of a branched polypropylene-based resin used in each of Examples and Comparative Examples was measured in accordance with JIS K 7161.

<Melt tension>

The melt tension of a branched polypropylene-based resin used in each of Examples and Comparative Examples was measured with use of Capilograph 1D (manufactured by TOYO SEIKI SEISAKU-SHO, LTD, Japan). The details of the measurement are the following (1) to (5): (1) a barrel having a diameter of 9.55 mm that had been heated to a temperature of 200°C was filled with the branched polypropylene-based resin used in each of Examples and Comparative Examples; (2) subsequently, the branched polypropylene-based resin was heated for 10 minutes within the barrel, which had been heated to a temperature of 200°C; (3) subsequently, while the branched polypropylene-based resin was discharged in the form of a strand through a capillary die (opening diameter: 1.0 mm, length: 10 mm) at a piston lowering speed (10 mm/minutes) which was kept constant, this strand-like resin was passed through a tension detecting pulley located 350 mm below the capillary die, and thereafter, take-up of the strand-like resin with use of a take-up roll was started; (4) after the drawing of the strand-like resin became stable, the speed at which the strand-like resin was taken up was increased from an initial speed of 1.0 m/minute to a speed of 200 m/minute at a constant rate in 4 minutes; (5) a load acting on the pulley, which was equipped with a load cell, at a point in time when the strand-like resin fractured was measured as the melt tension.

<Crystal amount ΔH>

The crystal amount ΔH of a branched polypropylene-based resin used in each of Examples and Comparative Examples was calculated by carrying out the following (1) and (2) in sequence. (1) in a DSC curve, measured in the DSC method, of the branched polypropylene-based resin, the DSC curve being obtained in the second temperature increase (i.e., in (a3)), the point on the DSC curve that corresponded to 80°C was determined as A, and the point on the DSC curve that corresponded to the end of melting was determined as B; and (2) the quantity of heat (J/g) calculated from a region bounded by the line segment AB and the DSC curve was defined as ΔH.

<Bulk density>

The bulk density of extruded expanded particles was calculated by carrying out the following (1) to (3) in sequence: (1) a container having a known volume V (L), such as, for example, a graduated cylinder, a beaker, or a bucket, was filled with the extruded expanded particles to the brim; (2) the powder surface (the top surface) of the container was leveled, and the weight W (g) of the extruded expanded particles inside the container was measured; and (3) the bulk density of the extruded expanded particles was calculated from the following formula:

$$\text{Bulk density (g/L)} = \text{weight W (g) of extruded expanded particles / volume V (L) of container.}$$

<Average cell diameter>

The average cell diameter was calculated by carrying out the following (1) to (4) in sequence: (1) the extruded expanded particle was cut with a razor such that the razor passes through the center of the extruded expanded particle; (2) a cut surface obtained was observed with use of a light microscope; (3) a 2000-μm straight line was drawn on the cut surface, and the number of cells present in the straight line was counted. The numbers of cells of 10 extruded expanded particles were measured, and the arithmetic average of the numbers of cells was calculated; and (4) the average cell diameter of the extruded expanded particles used in the test was calculated from the formula below:

$$\text{Average cell diameter (μm)} = 2000 / \text{average number of cells.}$$

(Open cell ratio)

The open cell ratio of the extruded expanded particles was measured with use of an air-comparison pycnometer [Model 1000, manufactured by TOKYO SCIENCE CO., LTD.] in accordance with the method described in PROCEDURE C of ASTM D2856-87. Specifically, the open cell ratio of the extruded expanded particles was calculated by carrying out the following (1) to (3) in sequence: (1) the volume Vc ($cm^3$) of the extruded expanded particles was measured with use of the air-comparison pycnometer; (2) subsequently, all of the extruded expanded particles after the measurement of the Vc were submerged in ethanol contained in a graduated cylinder; (3) thereafter, the apparent volume Va ($cm^3$) of the extruded expanded particles was determined from the amount of increase in the level of the ethanol in the graduated cylinder; and (4) the open cell ratio of the extruded expanded particles was calculated by the following formula:

$$\text{The open cell ratio (\%)} = ((Va - Vc) \times 100) / Va.$$

(Molding range)

A mold which was 400 mm in length, 300 mm in width, and 60 mm in thickness was provided with an 18-mm gap, and was filled with the extruded expanded particles. Polypropylene-based resin foamed molded products were obtained through in-mold foam molding of the extruded expanded particles at steam pressures of a certain range, by changing the steam pressure of the in-mold foam molding in 0.02 MPa (gage pressure) steps. Then, the range of the steam pressures during in-mold foam molding was determined, the range allowing provision of a polypropylene-based resin foamed molded product that satisfies the following: a foamed molded product: (x1) in which the extruded expanded particles are sufficiently fused together (e.g., the rate of internal fusion is not less than 80%); (x2) which has a gap between the extruded expanded particles sufficiently filled; (x3) which has a beautiful surface; (x4) the surface of which is unmelted; and (x5) to which the shape of a mold used for the in-mold foam molding is transferred without a shrinkage of 5% or more of the size of the mold. Note that the above evaluations were made with use of molded products, the molded product having been dried for 12 to 24 hours after molding with use of a dryer at 75°C to 80°C and then caused to stand for not less than 24 hours in an environment where the room temperature is 23°C and the humidity is 50%.

Assuming that the range of steam pressures obtained by the above method was P1 to P2, the "P1 to P2" was defined as a "workable steam pressure range", and the "value" obtained by a subtraction of P2-P1 was defined as the "molding range of extruded expanded particles". The "workable steam pressure range" and the "molding range of polypropylene-based resin extruded expanded particles" are shown in the rows of "Steam pressure range" and "molding range", respectively, in Tables 2 to 4.

<Density of foamed molded product>

The density of a foamed molded product obtained in each of Examples and Comparative Examples was calculated by carrying out the following (1) to (3) in sequence: (1) the weight W1 (g) of the foamed molded product was measured; (2) the respective dimensions of the length, width, and thickness of the foamed molded product were measured, and the volume V1 (L) was then calculated; and (3) the density was calculated from W1 / V1.

<Static compressive strength>

A specimen was cut from a foamed molded product obtained in each of Examples and Comparative Examples, the specimen being 50 mm in length, 50 mm in width, and 50 mm in thickness. In this respect, in relation to faces perpendicular to the thickness direction of the foamed molded product, only one of the faces was subjected to the cutting. This means that the other of faces perpendicular to the thickness direction of the foamed molded product, which was not subjected to the cutting, is the face (also referred to as a skin layer) that had been in contact with the mold during the in-mold foam molding. The value of the compressive stress at 50% compression of the specimen was measured for compression at a rate of 10% of the thickness per minute (approximately 5 mm/minute), with use of a tension and compression testing machine (e.g., TG-50kN manufactured by MinebeaMitsumi Inc.), in compliance with ISO 844. A value thereby obtained was defined as the static compressive strength of the foamed molded product.

(Tensile elongation at break)

The tensile elongation at break (%) of a foamed molded product obtained in each of Examples and Comparative Examples was determined from the result of a tensile test carried out with use of the foamed molded product as a sample, in accordance with ISO 1798. Specifically, in the tensile test with use of the sample, the percentage of the tensile elongation at the point of break of the sample was measured, and the measurement value was determined as being the tensile elongation at break (%) of the foamed molded product.

(Materials)

The following materials were used in Examples and Comparative Examples.

<Raw material resin>

· F-724NPC (manufactured by Prime Polymer Co., Ltd., linear polypropylene-based resin (polypropylene-based random copolymer), melting point: 150°C, MFR: 7 g/10 minutes)
· F113G (manufactured by Prime Polymer Co., Ltd., linear polypropylene-based resin (propylene homopolymer), melting point: 162°C, MFR: 3 g/10 minutes)
WB 140HMS (manufactured by Borealis, branched polypropylene-based resin, melting point: 162°C, MFR: 2 g/10 minutes, melt tension: 14.4 cN)

· F227D (manufactured by Prime Polymer Co., Ltd., linear polypropylene-based resin (polypropylene-based random copolymer), melting point: 140°C, MFR: 7 g/10 minutes)
· F-744NP (manufactured by Prime Polymer Co., Ltd., linear polypropylene-based resin (polypropylene-based random copolymer), melting point: 134°C, MFR: 7 g/10 minutes)
· E228 (manufactured by Prime Polymer Co., Ltd., linear polypropylene-based resin (polypropylene-based random copolymer), melting point: 146°C, MFR: 8 g/10 minutes)
· RD208CF (manufactured by Borealis, linear polypropylene-based resin (polypropylene-based random copolymer), melting point: 140°C, MFR: 8 g/10 minutes)

<Conjugated diene compound>

· Isoprene: isoprene monomer manufactured by KURARAY CO., LTD.

<Radical polymerization initiator>

· t-Butylperoxy isopropyl carbonate: PERBUTYL (registered trademark) I, manufactured by NOF CORPORATION
<Additive>
· Talc: Luzenac 20MO manufactured by Imerys
· Carbon black

Note that the carbon black was used in the form of a carbon black masterbatch which contains carbon black at a concentration of 40%. The carbon black masterbatch was prepared as follows. Carbon black was blended in a branched polypropylene-based resin mixture used in Examples and Comparative Examples such that the concentration of the carbon black was a concentration of 40%. The blend was melted and kneaded via an extruder. A melted and kneaded product thereby obtained was extruded in water and cut. The carbon black masterbatch was thus prepared. For example, in Example 8, carbon black was blended in a mixture of 80 weight% of a resin A and 20 weight% of a resin D. In the rows of "Inorganic coloring agent" in Tables 2 to 4, numeric characters outside parentheses and a numerical value in the parentheses are shown. The numeric characters outside the parentheses indicate the amount of the carbon black masterbatch blended, and the numeric characters in the parentheses indicate the amount of carbon black actually blended.

[Production of branched polypropylene-based resin]

As the branched polypropylene-based resin, a resin A was produced as follows. First, F-724NPC, which is a raw material resin, was fed to a twin screw extruder, and thereafter, a radical polymerization initiator was fed to the twin screw extruder in an amount of 1.0 part by weight relative to 100 parts by weight of the raw material resin. Subsequently, a conjugated diene compound was fed in an amount of 0.45 parts by weight relative to 100 parts by weight of the raw material resin, to the twin screw extruder, which contained the raw material resin and the radical polymerization initiator that were melted and kneaded. A resin mixture was thus prepared in the twin screw extruder. The amount of the resin mixture fed to the twin screw extruder was 70kg/h. Note that the amount of the resin mixture fed is intended to mean the amount per unit time in which the resin mixture was prepared in the twin screw extruder as of the point in time when the conjugated diene compound was fed to the twin screw extruder.
The prepared resin mixture was melted and kneaded in the twin screw extruder at a cylinder temperature of 200°C and at a screw rotational speed of 230 rpm, so that a branched polypropylene-based resin was obtained. The branched polypropylene-based resin obtained was discharged through the die in the form of a strand in a discharge quantity of 70 kg/h. The discharged branched polypropylene-based resin (strand) was (a) cooled with water and then (b) chopped into pellets (cylindrical shape). Resins B, and D to H were obtained in the same manner as described above, except that the types of the raw material resins, the amount of the radical polymerization initiator added, and/or the amount of the conjugated diene compound added were changed as shown in Table 1.
Used as resin C was WB140HMS, which is a branched polypropylene-based resin. Used as resin J was RD208CF. Thus, these resins C and J were used without being subjected to the separate reaction with the conjugated diene compound as described above.

[Examples 1 to 8, Comparative Examples 1 to 14]

Used as the device for use in producing the extruded expanded particles was a device including a twin screw extruder with a screw diameter of φ 26 mm, a melt cooler, a diverter valve, and a die that were connected in series. A resin(s) and an additive(s) of the types shown in Tables 2 to 4 were blended with each other in amounts shown in Tables 2 to 4, so that a polypropylene-based resin composition for extrusion foaming was prepared. Subsequently, the resin composition was fed to the twin screw extruder, and was melted and kneaded at the cylinder temperature (extruder temperature) shown in Tables 2 to 4. Further, carbon dioxide, which is a blowing agent, was fed from an injection portion provided in the middle part of the extruder, in the amount shown in Tables 2 to 4, with use of a metering pump, and a composition thereby obtained was further melted and kneaded.

A melted and kneaded product thereby obtained was cooled by passing through the melt cooler connected to an end of the twin screw extruder and having the temperature set to the temperature shown in Tables 2 to 4. Subsequently, the melted and kneaded product was extruded, through the die attached to an end of the melt cooler, to the air having a pressure lower than the internal pressure of the device (HC method) or to a region having a pressure lower than the internal pressure of the device and filled with water (UWC method), so that the melted and kneaded product expanded. A composition immediately after passing through the die was chopped via a rotary cutter attached to an end of the die, so that extruded expanded particles were obtained. The temperature (resin temperature at the die) of the melted and kneaded product immediately before entering the die was the temperature shown in Tables 2 to 4. The temperature of the melted and kneaded product immediately before entering the die was measured via a thermometer provided near the exit of the diverter valve, specifically at a location 10 mm upstream of the entrance of the die in an extruding direction, so as to be in contact with the melted and kneaded product. The bulk density, average cell diameter, and open cell ratio of the extruded expanded particles obtained were measured. The measurement results are shown in Tables 2 to 4. In addition, the molding range was evaluated with use of the extruded expanded particles obtained. The results thereby obtained are shown in the rows of "steam pressure range" and "molding range" of Tables 2 to 4.

As to the extruded expanded particles obtained, with use of a molding machine (KD345) manufactured by DAISEN Co., Ltd., a block-shaped mold (400 mm in length × 300 mm in width × variable thickness) was adjusted so as to have a thickness of 78 mm (gap-in-mold rate: 30%), and the mold was filled with the extruded expanded particles. The mold was then compressed so as to have a thickness of 60 mm. Subsequently, the air inside the mold was expelled with use of steam having a steam pressure of 0.10 MPa (gage pressure), and thereafter, heat-molding was carried out for 10 seconds with use of steam having a steam pressure of 0.20 MPa (gage pressure), so that a foamed molded product was obtained. The density, static compressive strength, and tensile elongation at break of the foamed molded product obtained were measured. The measurement results are shown in Tables 2 to 4.

[Evaluation results]

The physical properties of the resins A to H and J are shown in Table 1. The resins A to C fall into the branched polypropylene-based resin (A). The resins D to F fall into the branched polypropylene-based resin (B). The resins G and H fall into another branched polypropylene-based resin (referred to as a branched polypropylene-based resin (C) for convenience). The resin J is a linear polypropylene-based resin.

[Table 1]

(Table 1)

| | | Raw material resin | Modification condition (amounts added [parts by weight]) | | MFR [g/10min] | Melting point [°C] | Tensile modulus [MPa] | Nominal tensile strain at break [%] | Melt tension [cN] | ΔH [J/g] |
|---|---|---|---|---|---|---|---|---|---|---|
| | | | Radical polymerization initiator | conjugated diene compound (isoprene) | | | | | | |
| Branched polypropylene-based resin (A) | Resin A | Prime Polymer Co., Ltd., F-724NPC | 1.0 | 0.45 | 2 | 149 | 1150 | 43 | 10.2 | 79 |
| | Resin B | Prime Polymer Co., Ltd., F113G | 1.0 | 0.55 | 2 | 158 | 1500 | 21 | 11.1 | 93 |
| | Resin C | Borealis, WB140HMS | - | - | 2 | 161 | 1700 | 19 | 14.4 | 96 |
| Branched polypropylene-based resin (B) | Resin D | Prime Polymer Co., Ltd., F227D | 1.0 | 0.40 | 2 | 142 | 820 | 144 | 9.7 | 64 |
| | Resin E | Prime Polymer Co., Ltd., F227D | 2.0 | 0.50 | 2 | 139 | 750 | 62 | 10.2 | 60 |
| | Resin F | Prime Polymer Co., Ltd., F-744NP | 1.0 | 0.45 | 2 | 139 | 600 | 190 | 9.8 | 48 |
| Branched polypropylene-based resin (C) | Resin G | Prime Polymer Co., Ltd., F227D | 3.0 | 0.60 | 2 | 138 | 700 | 39 | 10.3 | 58 |
| | Resin H | Prime Polymer Co., Ltd., E228 | 1.0 | 0.45 | 2 | 145 | 1000 | 57 | 8.9 | 68 |
| Linear polypropylene-based resin | Resin J | Borealis, RD208CF | - | - | 8 | 140 | 600 | >200 | - | 67 |

Tables 2 to 4 show the formulation of the extruded expanded particles, production conditions, the moldability of the extruded expanded particles, the physical properties of the foamed molded product, etc. for each of Examples 1 to 8 and Comparative Examples 1 to 14.

[Table 2]

(Table 2)

| | | | | Example 1 | Example 2 | Example 3 | Example 4 | Example 5 | Example 6 | Example 7 | Example 8 |
|---|---|---|---|---|---|---|---|---|---|---|---|
| Formulation | (A) | | Resin A (F-724NPC) | weight% | 80 | 70 | 80 | 80 | 70 | 80 | - | - |
| | | | Resin B (F113G) | weight% | - | - | - | - | - | - | 70 | - |
| | | | Resin C (WB140HMS) | weight% | - | - | - | - | - | - | - | 70 |
| | (B) | | Resin D (F227D) | weight% | 20 | 30 | - | - | - | 20 | 30 | 30 |
| | | | Resin E (F227D) | weight% | - | - | 20 | - | - | - | - | - |
| | | | Resin F (F-744NP) | weight% | - | - | - | 20 | 30 | - | - | - |
| | (C) | | Resin G (F227D) | weight% | - | - | - | - | - | - | - | - |
| | | | Resin H (E228) | weight% | - | - | - | - | - | - | - | - |
| | Linear | | Resin J (RD208CF) | weight% | - | - | - | - | - | - | - | - |
| Additive | | Talc | | parts by weight | 0.2 | 0.2 | 0.2 | 0.2 | 0.2 | 0.2 | 0.2 | 0.2 |
| | | 40% carbon black masterbatch (amount of carbon black) | | parts by weight | - | - | - | - | - | 4.25 (1.7) | 4.25 (1.7) | 4.25 (1.7) |
| Blowing agent | | Carbon dioxide | | parts by weight | 1.7 | 1.7 | 1.7 | 1.7 | 1.7 | 3 | 3 | 3 |
| Extrusion condition | | Extruder temperature | | °C | 200 | 200 | 200 | 200 | 200 | 200 | 215 | 215 |
| | | Melt cooler temperature | | °C | 157 | 157 | 157 | 157 | 157 | 150 | 170 | 175 |
| | | Resin temperature at die | | °C | 156 | 156 | 156 | 156 | 156 | 158 | 177 | 183 |
| | | Granulation method | | | HC | HC | HC | HC | HC | UWC | UWC | UWC |
| Expanded particles | | Bulk density | | g/L | 60 | 60 | 60 | 60 | 60 | 95 | 95 | 95 |
| | | Average cell diameter | | μm | 260 | 270 | 260 | 270 | 270 | 190 | 180 | 180 |
| | | Open cell ratio | | % | 2 | 2 | 3 | 2 | 3 | 4 | 5 | 4 |
| Molding | | Steam pressure range | | MPa · G | 0.24-0.30 | 0.22-0.28 | 0.22-0.28 | 0.24-0.30 | 0.22-0.28 | 0.24-0.30 | 0.34-0.40 | 0.36-0.40 |
| | | Molding range | | MPa · G | 0.06 | 0.06 | 0.06 | 0.06 | 0.06 | 0.06 | 0.06 | 0.04 |
| Physical properties of molded product | Compression test | Density | | g/L | 70 | 70 | 70 | 70 | 70 | 140 | 140 | 140 |
| | | Static compressive strength | | kPa | 470 | 460 | 460 | 470 | 450 | 1500 | 1450 | 1430 |
| | Tensile test | Density | | g/L | 65 | 65 | 65 | 65 | 65 | 130 | 130 | 130 |
| | | Tensile elongation at break | | % | 19 | 21 | 19 | 19 | 22 | 11 | 11 | 11 |

EP 4 306 579 A1

(Table 3)

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Formulation | (A) | Resin A (F-724NPC) | weight% | 100 | 90 | 60 | - | - | - |
| | | Resin B (F113G) | weight% | - | - | - | - | - | - |
| | | Resin C (WB140HMS) | weight% | - | - | - | - | - | - |
| | (B) | Resin D (F227D) | weight% | - | 10 | 40 | 100 | - | - |
| | | Resin E (F227D) | weight% | - | - | - | - | 100 | - |
| | | Resin F (F-744NP) | weight% | - | - | - | - | - | 100 |
| | (C) | Resin G (F227D) | weight% | - | - | - | - | - | - |
| | | Resin H (E228) | weight% | - | - | - | - | - | - |
| | Linear | Resin J (RD208CF) | weight% | - | - | - | - | - | - |
| Additive | Talc | | parts by weight | 0.2 | 0.2 | 0.2 | 0.2 | 0.2 | 0.2 |
| | 40% carbon black masterbatch (amount of carbon black) | | parts by weight | - | - | - | - | - | - |
| Blowing agent | Carbon dioxide | | parts by weight | 1.7 | 1.7 | 1.7 | 1.7 | 1.7 | 1.7 |
| Extrusion condition | Extruder temperature | | °C | 200 | 200 | 200 | 200 | 200 | 200 |
| | Melt cooler temperature | | °C | 157 | 157 | 157 | 148 | 147 | 145 |
| | Resin temperature at die | | °C | 156 | 156 | 156 | 147 | 146 | 145 |
| Granulation method | | | | HC | HC | HC | HC | HC | HC |
| Expanded particles | Bulk density | | g/L | 60 | 60 | 60 | 60 | 60 | 60 |
| | Average cell diameter | | µm | 260 | 260 | 270 | 290 | 280 | 280 |
| | Open cell ratio | | % | 2 | 2 | 3 | 4 | 4 | 6 |
| Molding | Steam pressure range | | MPa·G | 0.24-0.30 | 0.24-0.30 | 0.22-0.28 | 0.18-0.24 | 0.18-0.24 | 0.16-0.22 |
| | Molding range | | MPa·G | 0.06 | 0.06 | 0.06 | 0.06 | 0.06 | 0.06 |
| Physical properties of molded product | Compression test | Density | g/L | 70 | 70 | 70 | 70 | 70 | 70 |
| | | Static compressive strength | kPa | 480 | 480 | 400 | 350 | 340 | 290 |
| | Tensile test | Density | g/L | 65 | 65 | 65 | 65 | 65 | 65 |
| | | Tensile elongation at break | % | 16 | 16 | 22 | 25 | 23 | 26 |

## [Table 4]

(Table 4)

| Category | Item | Unit | Comparative Example 7 | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|---|---|
| Formulation (A) | Resin A (F-724NPC) | weight% | - | 80 | - | 100 | - | - | - | - |
| | Resin B (F113G) | weight% | - | - | - | - | 100 | - | - | - |
| | Resin C (WB140HMS) | weight% | - | - | - | - | - | 100 | - | 70 |
| (B) | Resin D (F227D) | weight% | - | - | - | - | - | - | 100 | - |
| | Resin E (F227D) | weight% | - | - | - | - | - | - | - | - |
| | Resin F (F-744NP) | weight% | - | - | - | - | - | - | - | - |
| (C) | Resin G (F227D) | weight% | 100 | 20 | 100 | - | - | - | - | - |
| | Resin H (E22S) | weight% | - | - | - | - | - | - | - | 30 |
| Linear | Resin J (PD20SCF) | weight% | - | - | - | - | - | - | - | - |
| Additive | Talc | parts by weight | 0.2 | 0.2 | 0.2 | 0.2 | 0.2 | 0.2 | 0.2 | 0.2 |
| | 40% carbon black masterbatch (amount of carbon black) | parts by weight | - | - | - | 4.25 (1.7) | 4.25 (1.7) | 4.25 (1.7) | 4.25 (1.7) | 4.25 (1.7) |
| Blowing agent | Carbon dioxide | parts by weight | 1.7 | 1.7 | 1.7 | 3 | 3 | 3 | 3 | 3 |
| Extrusion condition | Extruder temperature | °C | 200 | 200 | 200 | 200 | 215 | 215 | 200 | 215 |
| | Melt cooler temperature | °C | 146 | 157 | 151 | 150 | 170 | 175 | 149 | 175 |
| | Resin temperature at die | °C | 145 | 156 | 151 | 159 | 178 | 183 | 157 | 180 |
| | Granulation method | | HC | HC | HC | UWC | UWC | UWC | UWC | UWC |
| Expanded particles | Bulk density | g/L | 60 | 60 | 60 | 95 | 95 | 95 | 95 | 95 |
| | Average cell diameter | μm | 280 | 260 | 260 | 180 | 170 | 170 | 190 | 170 |
| | Open cell ratio | % | 3 | 3 | 3 | 4 | 6 | 4 | 3 | 12 |
| Molding | Steam pressure range | MPa·G | 0.16-0.22 | 0.22-0.28 | 0.20-0.24 | 0.24-0.30 | 0.38-0.40 | 0.40-0.42 | 0.18-0.24 | NG |
| | Molding range | MPa·G | 0.06 | 0.06 | 0.04 | 0.06 | 0.02 | 0.02 | 0.06 | - |
| | Density | g/L | 70 | 70 | 70 | 140 | 140 | 140 | 140 | 140 |
| Physical properties of molded product — Compression test | Static compressive strength | kPa | 310 | 430 | 400 | 1530 | 1480 | 1490 | 1190 | 1170 |
| | Density | g/L | 65 | 65 | 65 | 130 | 130 | 130 | 130 | 130 |
| Tensile test | Tensile elongation at break | % | 17 | 16 | 21 | 7 | 6 | 6 | 15 | 8 |

In Tables 2 to 4, the branched polypropylene-based resin (A), the branched polypropylene-based resin (B), the branched polypropylene-based resin (C), and the linear polypropylene-based resin are denoted simply by (A), (B), (C), and Linear, respectively. As to the resins A, B, and D to H, the resins in parentheses in Tables 2 to 4 are respective raw material resins used in producing the resins A, B, and D to H. As to the resins C and J, the resins in parentheses in Tables 2 to 4 are the resins C and J without modification. A resin formulation in Tables 2 to 4 indicates the proportion of each resin per 100 weight% of all resin components (mixture of resins A to H and J). The amounts of the additive and the blowing agent in Tables 2 to 4 indicate the amounts added per 100 parts by weight of all resin components.

Each of Examples 1 to 8 includes: a specific amount of any of the resins A to C that correspond to the branched polypropylene-based resin (A) having a tensile modulus of not less than 1100 MPa; and a specific amount of any of the resins D to F that correspond to the branched polypropylene-based resin (B) having a tensile modulus of not less than 550 MPa and not more than 950 MPa and a nominal tensile strain at break of not less than 50%. It is found that Examples 1 to 8 provide polypropylene-based resin extruded expanded particles excellent in moldability and polypropylene-based resin foamed molded products excellent in static compressive strength and tensile elongation at break.

Here is a detailed description of the evaluation results. The evaluation results need to be based on the comparison between Example and Comparative Example that are the same in the type of a resin which is the main component, the granulation method, and the density of a foamed molded product. Hereinafter, the phrase "Comparative Example is inferior in tensile elongation at break" means that compared to Example, Comparative Example has a decreased tensile elongation at break the change ratio of which is greater than the change ratio of the static compressive strength. The phrase "Comparative Example is inferior in static compressive strength" means that compared to Example, Comparative Example has a decreased static compressive strength the change ratio of which is greater than the change ratio of the tensile elongation at break.

Described first are comparisons between Examples 1 to 5 and Comparative Examples 1 to 9, the granulation methods of which are HC and the foamed molded products of which have a density of 70 g/L (at the time of measuring the static compressive strength) or 65 g/L (at the time of measuring the tensile elongation at break). Comparative Examples 1 and 2, in which the usage amounts of the resin A corresponding to the branched polypropylene-based resin (A) are greater than 85 weight%, are inferior in tensile elongation at break to Examples 1 to 5, in which the usage amounts of the resin A are not more than 85 weight%. Comparative Example 3, in which the usage amount of the resin A is less than 65 weight%, is inferior in static compressive strength to Examples 1 to 5, in which the usage amounts of the resin A are not less than 65 weight%.

Comparative Example 4, in which the usage amount of the resin D corresponding to the branched polypropylene-based resin (B) is greater than 35 weight%, is inferior in static compressive strength to Examples 1 and 2, in which the usage amounts of the resin D are not more than 35 weight%. Comparative Example 5, in which the usage amount of the resin E corresponding to the branched polypropylene-based resin (B) is greater than 35 weight%, is inferior in static compressive strength to Example 3, in which the usage amount of the resin E is not more than 35 weight%. Comparative Example 6, in which the usage amount of the resin F corresponding to the branched polypropylene-based resin (B) is greater than 35 weight%, is inferior in static compressive strength to Examples 4 and 5, in which the usage amounts of the resin F are not more than 35 weight%.

Comparative Examples 7 and 9, in which any resin corresponding to either the branched polypropylene-based resin (A) or the branched polypropylene-based resin (B) is not used, and Comparative Example 8, in which the branched polypropylene-based resin (C) is used instead of the branched polypropylene-based resin (A) and the branched polypropylene-based resin (B), are inferior in static compressive strength to Examples 1 to 5.

Described next are comparisons between Examples 6 to 8 and Comparative Examples 10 to 14, the granulation method of which are UWC and the foamed molded products of which have a density of 140 g/L (at the time of measuring the static compressive strength) or 130 g/L (at the time of measuring the tensile elongation at break). Comparative Example 10, in which the usage amount of the resin A corresponding to the branched polypropylene-based resin (A) is greater than 85 weight%, is found to be inferior in tensile elongation at break to Example 6, in which the usage amount of the resin A is not more than 85 weight%. Comparative Example 11, in which the usage amount of the resin B corresponding to the branched polypropylene-based resin (A) is greater than 85 weight%, is inferior in tensile elongation at break to Example 7, in which the usage amount of the resin B is not more than 85 weight%. Comparative Example 12, in which the usage amount of the resin C corresponding to the branched polypropylene-based resin (A) is greater than 85 weight%, is inferior in tensile elongation at break to Example 8, in which the usage amount of the resin C is not more than 85 weight%.

Comparative Example 13, in which the usage amount of the resin D corresponding to the branched polypropylene-based resin (B) is greater than 35 weight%, is inferior in static compressive strength to Examples 6 to 8, in which the usage amounts of the resin D are not more than 35 weight%. Comparative Example 14, in which any resin corresponding to the branched polypropylene-based resin (B) was not used but the resin J, which is a linear polypropylene-based resin, was used, had a high open cell ratio, and the molding range thereof could not be measured.

Example 1 contains 80 weight% of the resin A and 20 weight% of the resin D. In a case where the resin A accounts for 100 weight%, the static compressive strength is 480 kPa and the tensile elongation at break is 16%, as can be seen from Comparative Example 1. In a case where the resin D accounts for 100 weight%, the static compressive strength is 350 kPa and the tensile elongation at break is 25%, as can be seen from Comparative Example 4. From the results of Comparative Example 1 and Comparative Example 4, the static compressive strength of Example 1 is calculated using the proportionality based on the amounts of the resins A and D blended, as 480 kPa $\times$ 0.80 + 350 kPa $\times$ 0.20 = 454 kPa, and the tensile elongation at break is calculated using the proportionality based on the amounts of the resins A and D blended, as 16% × 0.80 + 25% × 0.20 = 17.8%. However, the static compressive strength and the tensile elongation at break of Example 1 were 470 kPa and 19%, respectively, in reality. Thus, it has been found that the static compressive strength and the tensile elongation at break are higher than the calculation values thereof.

From comparisons between Examples 1 and 2 and Comparative Examples 1 and 4, between Example 3 and Comparative Examples 1 and 5, between Examples 4 and 5 and Comparative Examples 1 and 6, between Example 6 and Comparative Examples 10 and 13, between Example 7 and Comparative Example 11 and 13, and between Example 8 and Comparative Examples 12 and 13, it has been found that all of Examples have static compressive strengths and tensile elongations at break which are equal to or higher than the respective calculation values.

Industrial Applicability

With an embodiment of the present invention, it is possible to provide extruded expanded particles excellent in moldability. Thus, an embodiment of the present invention can be suitably used to obtain a foamed molded product excellent in static compressive strength and tensile elongation at break. Accordingly, an embodiment of the present invention can be suitably used in the fields of, for example, automotive interior materials, shock-absorbing materials, packaging materials, and heat insulating materials.

**Claims**

1. A polypropylene-based resin composition for extrusion foaming comprising:

   relative to 100 weight% of all resin components of the polypropylene-based resin composition for extrusion foaming,
   a polypropylene-based resin (A) with a branched structure in an amount of not less than 65 weight% and not more than 85 weight%, the polypropylene-based resin (A) with a branched structure having a tensile modulus defined in JIS K 7161 of not less than 1100 MPa; and
   a polypropylene-based resin (B) with a branched structure in an amount of not less than 15 weight% and not more than 35 weight%, the polypropylene-based resin (B) with a branched structure having a tensile modulus defined in JIS K 7161 of not less than 550 MPa and not more than 950 MPa and a nominal tensile strain at break defined in JIS K 7161 of not less than 50%.

2. The polypropylene-based resin composition for extrusion foaming according to claim 1, wherein the polypropylene-based resin (A) with a branched structure has a melting point of not less than 145°C and the polypropylene-based resin (B) with a branched structure has a melting point of less than 145°C.

3. The polypropylene-based resin composition for extrusion foaming according to claim 1 or 2, wherein the polypropylene-based resin (A) with a branched structure has a crystal amount ΔH measured by differential scanning calorimetry of not less than 70 J/g and the polypropylene-based resin (B) with a branched structure has a crystal amount ΔH measured by differential scanning calorimetry of not less than 40 J/g and not more than 65 J/g.

4. The polypropylene-based resin composition for extrusion foaming according to any one of claims 1 to 3, wherein the polypropylene-based resin (A) with a branched structure has a nominal tensile strain at break defined in JIS K 7161 of less than 50%.

5. The polypropylene-based resin composition for extrusion foaming according to any one of claims 1 to 4, wherein at least one selected from the group consisting of the polypropylene-based resin (A) with a branched structure and the polypropylene-based resin (B) with a branched structure has a melt tension of 5 cN to 20 cN.

6. The polypropylene-based resin composition for extrusion foaming according to any one of claims 1 to 5, wherein at least one selected from the group consisting of the polypropylene-based resin (A) with a branched structure and the polypropylene-based resin (B) with a branched structure includes a structural unit derived from a conjugated diene compound.

7. The polypropylene-based resin composition for extrusion foaming according to any one of claims 1 to 6, wherein at least one selected from the group consisting of the polypropylene-based resin (A) with a branched structure and the polypropylene-based resin (B) with a branched structure has a melt flow rate of 0.3 g/10 minutes to 20.0 g/10 minutes.

8.   Polypropylene-based resin extruded expanded particles which are obtained by extrusion expansion of the polypropylene-based resin composition for extrusion foaming according to any one of claims 1 to 7.

9.   The polypropylene-based resin extruded expanded particles according to claim 8, wherein
the polypropylene-based resin extruded expanded particles have an average cell diameter of not less than 100 um and not more than 400 $\mu$m.

10.   The polypropylene-based resin extruded expanded particles according to claim 8 or 9, wherein
the polypropylene-based resin extruded expanded particles have an open cell ratio of not more than 15%.

11.   The polypropylene-based resin extruded expanded particles according to any one of claims 8 to 10, wherein
the polypropylene-based resin extruded expanded particles have a bulk density of not less than 40 g/L.

12.   A method for producing polypropylene-based resin extruded expanded particles comprising:

a first step of melting and kneading the polypropylene-based resin composition for extrusion foaming according to any one of claims 1 to 7 and a blowing agent in a production device; and
a second step of discharging, through a die, a melted and kneaded product obtained in the first step, to a region having a pressure lower than an internal pressure of the production device.

13.   The method according to claim 12, wherein
the blowing agent is at least one selected from the group consisting of an aliphatic hydrocarbon, a fluorinated hydrocarbon, carbon dioxide, air, nitrogen, and water.

14.   A polypropylene-based resin foamed molded product which is obtained by in-mold foam molding of the polypropylene-based resin extruded expanded particles according to any one of claims 8 to 11.

15.   A polypropylene-based resin foamed molded product,

the polypropylene-based resin foamed molded product being prepared by molding of extruded expanded particles obtained by extrusion expansion of a resin composition that includes a polypropylene-based resin with a branched structure,
the extruded expanded particles having an open cell ratio of not more than 15%,
the polypropylene-based resin foamed molded product having a density of 60 g/L to 300 g/L,
the polypropylene-based resin foamed molded product having
a tensile elongation at break that satisfies Expression 1 below and
a static compressive strength that satisfies Expression 2 below:

$$\text{Tensile elongation at break (\%)} \geq -0.000002 \times D^3 + 0.0011 \times D^2 - 0.285 \times D + 32.2 \cdots \text{(Expression 1)},$$

$$\text{Static compressive strength (kPa)} \geq 0.000049 \times D^3 + 0.0542 \times D^2 - 0.265 \times D + 146.9 \cdots \text{(Expression 2)},$$

where D of Expression 1 and Expression 2 represents the density (g/L) of the polypropylene-based resin foamed molded product.

## INTERNATIONAL SEARCH REPORT

| | International application No. |
|---|---|
| | **PCT/JP2022/009986** |

**A.    CLASSIFICATION OF SUBJECT MATTER**

*C08J 9/16*(2006.01)i
FI:   C08J9/16 CES

According to International Patent Classification (IPC) or to both national classification and IPC

**B.    FIELDS SEARCHED**

Minimum documentation searched (classification system followed by classification symbols)

C08J9/00 - 9/42, C08K3/00 - 13/08, C08L1/00 - 101/14, C08C19/00 - 19/44, C08F6/00 - 246/00, C08F301/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2009-533540 A (BOREALIS TECHNOLOGY OY) 17 September 2009 (2009-09-17)<br>entire text | 1-15 |
| A | WO 2020/174792 A1 (SEKISUI PLASTICS CO., LTD.) 03 September 2020 (2020-09-03)<br>entire text | 1-15 |
| A | JP 08-277340 A (JSP CORP.) 22 October 1996 (1996-10-22)<br>entire text | 1-15 |
| A | WO 2018/016399 A1 (KANEKA CORP.) 25 January 2018 (2018-01-25)<br>entire text | 1-15 |
| A | JP 2013-049830 A (NITTO DENKO CORP.) 14 March 2013 (2013-03-14)<br>entire text | 1-15 |
| A | JP 2016-069449 A (KANEKA CORP., GINPO PACK CO LTD.) 09 May 2016 (2016-05-09)<br>entire text | 1-15 |
| A | WO 2018/079699 A1 (KYORAKU CO., LTD.) 03 May 2018 (2018-05-03)<br>entire text | 1-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2022/009986** |

**C. DOCUMENTS CONSIDERED TO BE RELEVANT**

| Category* | Citation of document, with indication, where appropriate, of the relevant passages | Relevant to claim No. |
|---|---|---|
| A | JP 2005-023302 A (JSP CORP.) 27 January 2005 (2005-01-27)<br>entire text | 1-15 |
| A | JP 2004-339498 A (KANEKA CORP.) 02 December 2004 (2004-12-02)<br>entire text | 1-15 |
| A | JP 10-330436 A (PCD POLYMERE GMBH) 15 December 1998 (1998-12-15)<br>entire text | 1-15 |
| A | JP 2004-331722 A (KANEGAFUCHI CHEM. IND. CO., LTD.) 25 November 2004<br>(2004-11-25)<br>entire text | 1-15 |
| A | JP 2019-119759 A (IDEMITSU KOSAN CO., LTD.) 22 July 2019 (2019-07-22)<br>entire text | 1-15 |
| A | JP 2018-204008 A (KANEKA CORP.) 27 December 2018 (2018-12-27)<br>entire text | 1-15 |
| A | US 6225366 B1 (BOREALIS AG) 01 May 2001 (2001-05-01)<br>whole document | 1-15 |

Form PCT/ISA/210 (second sheet) (January 2015)

**INTERNATIONAL SEARCH REPORT**
Information on patent family members

International application No.

**PCT/JP2022/009986**

| Patent document cited in search report | | | Publication date (day/month/year) | Patent family member(s) | | | Publication date (day/month/year) |
|---|---|---|---|---|---|---|---|
| JP | 2009-533540 | A | 17 September 2009 | US WO EP | 2010/0168364 2007/118698 1847555 | A1 A1 A1 | |
| | | | | whole document whole document whole document | | | |
| WO | 2020/174792 | A1 | 03 September 2020 | (Family: none) | | | |
| JP | 08-277340 | A | 22 October 1996 | US EP | 5747549 775722 | A A1 | |
| | | | | whole document whole document | | | |
| WO | 2018/016399 | A1 | 25 January 2018 | US EP | 2019/0153188 3489287 | A1 A1 | |
| | | | | whole document whole document | | | |
| JP | 2013-049830 | A | 14 March 2013 | US | 2013/0079430 | A1 | |
| | | | | whole document | | | |
| JP | 2016-069449 | A | 09 May 2016 | (Family: none) | | | |
| WO | 2018/079699 | A1 | 03 May 2018 | US EP | 2019/0276615 3533823 | A1 A1 | |
| | | | | whole document whole document | | | |
| JP | 2005-023302 | A | 27 January 2005 | US EP | 2004/0254254 1486531 | A1 A1 | |
| | | | | whole document whole document | | | |
| JP | 2004-339498 | A | 02 December 2004 | (Family: none) | | | |
| JP | 10-330436 | A | 15 December 1998 | US EP | 6204348 879830 | B1 A1 | |
| | | | | whole document whole document | | | |
| JP | 2004-331722 | A | 25 November 2004 | (Family: none) | | | |
| JP | 2019-119759 | A | 22 July 2019 | (Family: none) | | | |
| JP | 2018-204008 | A | 27 December 2018 | (Family: none) | | | |
| US | 6225366 | B1 | 01 May 2001 | EP | 879844 | A1 | |
| | | | | whole document | | | |

Form PCT/ISA/210 (patent family annex) (January 2015)

**EP 4 306 579 A1**

REFERENCES CITED IN THE DESCRIPTION

**Patent documents cited in the description**

- JP 2009256460 A
- JP 2002542360 W
- WO 2020004429 A